(19) Europäisches Patentamt
European Patent Office
Office européen des brevets

(11) **EP 1 125 406 B1**

(12) **EUROPÄISCHE PATENTSCHRIFT**

(45) Veröffentlichungstag und Bekanntmachung des Hinweises auf die Patenterteilung:
**22.08.2007   Patentblatt 2007/34**

(21) Anmeldenummer: **99953801.0**

(22) Anmeldetag: **13.10.1999**

(51) Int Cl.:
*H04L 25/493* (2006.01)   *H04L 25/06* (2006.01)

(86) Internationale Anmeldenummer:
**PCT/EP1999/007684**

(87) Internationale Veröffentlichungsnummer:
**WO 2000/025490 (04.05.2000 Gazette 2000/18)**

(54) **VERFAHREN UND VORRICHTUNG ZUM AUFBEREITEN EINES EMPFANGENEN SIGNALS, DAS DATEN CODIERT ÜBERMITTELT**

METHOD AND DEVICE FOR PROCESSING A RECEIVED SIGNAL TRANSMITTING CODED DATA

PROCEDE ET DISPOSITIF POUR LE TRAITEMENT D'UN SIGNAL QUI TRANSMET DES DONNEES CODEES

(84) Benannte Vertragsstaaten:
**DE FR GB**

(30) Priorität: **27.10.1998   DE 19849408**

(43) Veröffentlichungstag der Anmeldung:
**22.08.2001   Patentblatt 2001/34**

(73) Patentinhaber: **Continental Teves AG & Co. oHG**
**60488 Frankfurt (DE)**

(72) Erfinder:
• **FEY, Wolfgang**
**D-65527 Niedernhausen (DE)**
• **CHEN, Ling**
**D-64289 Darmstadt (DE)**

(56) Entgegenhaltungen:
DE-A- 19 650 395        DE-A- 19 808 575
FR-A- 2 725 091         US-A- 5 012 467

• KARL STEINBUCH, WERNER RUPPRECHT: "Nachrichtentechnik, Band II: Nachrichtenübertragung" 1982, SPRINGER VERLAG , BERLIN, HEIDELBERG, NEW YORK 3 * Satz 0187; Anspruch 93 *

EP 1 125 406 B1

**Beschreibung**

Die vorliegende Erfindung betrifft Verfahren und eine Vorrichtung zum Aufbereiten eines empfangenen Signals, das Daten codiert übermittelt, gemäß den Oberbegriffen der unabhängigen Ansprüche.

Wenn ein empfangenes Signal, das codierte Daten enthält, aufbereitet und decodiert werden soll, müssen empfängerseitig bestimmte Voraussetzungen bekannt sein, auf deren Grundlage senderseitig die Codierung erfolgte, so daß die Decodierung schnell und zuverlässig erfolgen kann. Beispielsweise muß empfängerseitig das Codierverfahren bekannt sein (z.B. flankencodiert, binär, PWM, AM, FM). Da codierte Daten üblicherweise zeitseriell übertragen werden, muß bei bestimmten Codierverfahren, beispielsweise bei flankencodierten, binären Signalen oder bei PWM (Pulsweitenmodulation) auch die Zeitbasis bekannt sein, auf deren Grundlage die Codierung erfolgt, damit empfängerseitig richtig decodiert werden kann.

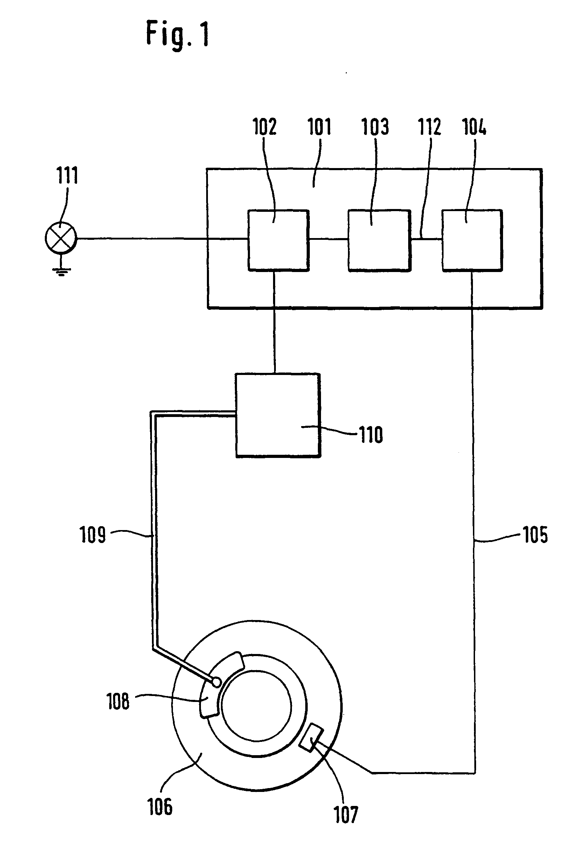

Aus der Druckschrift DE 19650935 A1 ist z.B. die senderseitige Gestaltung eines Daten übertragenden Signals bekannt. Es handelt sich hierbei um eine Anwendung im Fahrzeugbau, insbesondere darum, Daten von einem aktiven Radsensor zu einer übergeordneten Regelungseinrichtung zu übertragen. Ein solches System ist schematisch in Fig. 1 gezeigt. An einem Rad 106 ist einerseits ein Sensor 107 sowie andererseits eine Bremse 108 angebracht. Der Sensor 107 ist ein "aktiver" Sensor, was bedeutet, daß er nicht nur einlaufende elektrische Signale verändert (Spannung oder Strom), sondern seinerseits Signale aktiv gestaltet, um Informationen vom Rad 106 an eine übergeordnete Einrichtung 101 zu übertragen. Über eine Leitung 105 ist der Sensor 107 mit der Einrichtung 101 verbunden, wobei die Leitung 105 aus mehreren einzelnen Leitungen bestehen kann. Vom Sensor 107 aus werden verschiedene, das Rad 106 betreffende Informationen übertragen. Zunächst ist eine die Raddrehzahl betreffende Information zu übertragen. Darüber hinaus können andere Informationen übertragen werden, beispielsweise Temperatur, Bremsbackenverschleiß oder ähnliches. Da sich der Sensor 107 in einer vergleichsweise "rauhen" Umgebung, nämlich direkt am Rad befindet (Vibrationen, Temperaturunterschiede, Feuchtigkeit), und andererseits der Verkabelungsaufwand einfach gehalten werden soll, damit er wenig fehleranfällig ist, muß das Datenübertragungsverfahren so gestaltet werden, daß es trotz der oben beschriebenen, widrigen Umstände zuverlässig funktioniert.

Das System aus Fig. 1 weist in der Steuerungs- bzw. Regelungseinrichtung 101 eine erfindungsgemäße Vorrichtung 104 zur Aufbereitung eines Signals, das Daten codiert übermittelt, auf, daran anschließend eine Decodiereinrichtung 103, die über eine Leitung 112 , die aus mehreren einzelnen Leitungen bestehen kann, mit der Vorrichtung 104 verbunden ist, und danach eine Steuerung 102, die nach Maßgabe der empfangenen Signale (auch weiterer, nicht gezeigter Eingangssignale) einerseits Ansteuerdaten für das betrachtete Rad liefert und andererseits andere Daten, beispielsweise Alarme für Alarmeinrichtungen 111 oder ähnliches erzeugt. Die Steuerung 102 kann bspw. elektrische Ansteuersignale an einen Ventilblock 110 abgeben, der seinerseits über eine Hydraulikleitung 109 die Radbremse 108 beeinflußt.

Das im aktiven Sensor 107 erzeugte, über Leitung 105 an die erfindungsgemäße Vorrichtung 104 übertragene Signal kann so gestaltet sein, wie es in der DE 19650935 beschrieben ist. Es kann wie in Fig. 2 aussehen. Das vom Sensor 107 erzeugte Signal weist verschiedene Impulse auf, nämlich einen Radimpuls 201 und danach folgend Datenimpulse 203 mit dazwischenliegenden Impulspausen 202, 204 unterschiedlicher Bedeutung. Die erste Impulspause 202 kann senderseitig eingestellt werden und dient zur Zeitverzögerung vor der Übertragung von codierten Daten nach dem Radimpuls 201. Die Impulspausen 204 sind Datenimpulspausen, die ebenso wie die Datenimpulse 203 amplitudencodierte, binäre Daten anzeigen, die mit einem Zeittakt tp codiert wurden, der der idealen Breite des Radimpulses 201 entspricht. Die Datenimpulse 203 und Datenimpulspausen 204 haben ebenso die ideale Breite tp. Die Impulspause 202 hat eine Breite von tp/2, damit nach dem Ende eines Radimpulses 201 die Datenimpulse 203 und Datenimpulspausen 204 im Abstand von tp abgetastet werden können.Die Zeitverhältnisse zwischen Radimpuls, Datenimpuls und Impulspause müssen empfängerseitig bekannt sein, damit die Daten korrekt aufbereitet und decodiert werden können. Die Zeitbasis tp ist entweder empfängerseitig bekannt oder kann vorzugsweise bei der Aufbereitung durch Zeitmessung, z.B Ausmessung der Impulsbreite, erhalten werden.

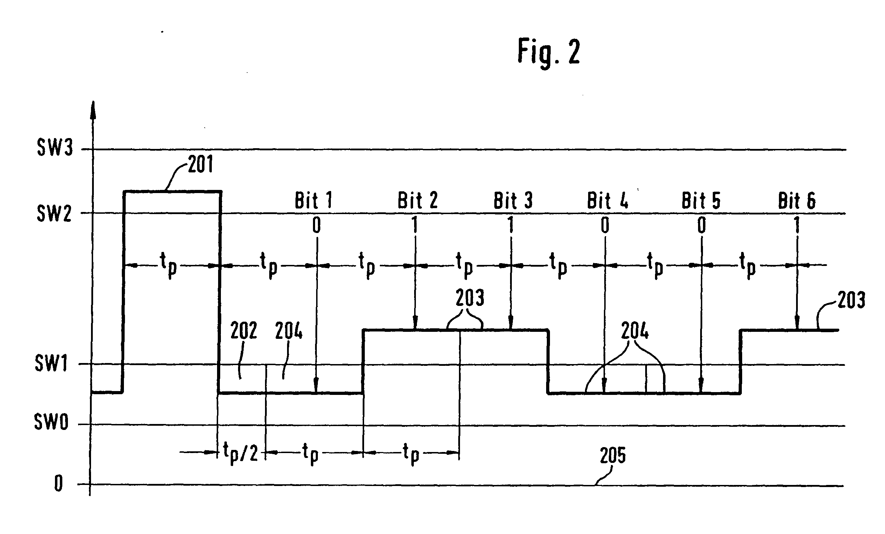

Vorzugsweise haben der Radimpuls 201 eine höhere Amplitude als die Datenimpulse 203. In Fig. 2 haben der Radimpuls 201 eine Amplitude, die höher als ein zweiter Schwellenwert SW2 und niedriger als ein dritter Schwellenwert SW3 ist, die Datenimpulse 203 eine Amplitude, die höher als ein erster Schwellenwert SW1, aber niedriger als SW2 ist, und die Impulspausen 202, 204 eine Amplitude, die höher als ein unterer-Schwellenwert SW0, aber niedriger als SW1 ist. Dabei liegt der untere Schwellenwert SW0 oberhalb einer Nullinie 205. Auf einen Radimpuls folgt eine begrenzte Anzahl von Datenimpulsen. Die codierten Daten zeigen beispielhaft eine Bitfolge von 011001, d.h. ein Datenimpuls 203 zeigt eine logische "1" und eine Datenimpulspause 204 eine logische "0". Die Abfolge aus einem Radimpuls 201 und Datenimpulsen 203 bzw. Datenimpulspausen 204 wird periodisch abgegeben, wobei die Periodendauer senderseitig nach Maßgabe der Raddrehzahl bestimmt wird, so daß nach den Datenimpulsen 203 wieder ein Radimpuls 201 mit erneuten Datenimpulsen 203 und/oder Datenimpulspausen 202, 204 folgt. Die Raddrehzahl kann dann aus dem Abstand aufeinanderfolgender Radimpulse 201 ermittelt werden. Zwischen aufeinanderfolgenden Radimpulsen 201 wird in Abhängigkeit vom zeitlichen Abstand der Radimpulse 201 eine geeignete Anzahl von Datenimpulsen 203 bzw. Datenimpulspausen 204, übertragen, mit der die weiteren Informationen wie z.B. Bremsbelagverschleiß, Bremsentemperatur, Bremsflüssig-keitstemperatur oder Bremsflüssigkeitszustand etc. vom Rad über die Leitung 105 zur erfindungsgemäßen Vorrichtung 104 übertragen werden können. Je kleiner der zeitliche Abstand zwischen den aufeinanderfolgenden Radimpulsen 201 ist, desto weniger Datenimpulse 203 bzw. Datenimpulspausen 204 können übertragen werden.

In der älteren Anmeldung DE 198 08 575.3 mit dem Titel "Verfahren und Vorrichtung zur Aufbereitung eines empfangenen, Daten codiert übermittelnden Signals" wird ein Verfahren und eine Vorrichtung zur Aufbereitung von auf oben beschriebene Weise codierten Daten angegeben. Dort werden die Breite $t_m$ eines empfangenen Radimpulses, die im optimalen Fall tp entspricht, als Zeitbasis bestimmt und danach die Datenimpulse in regelmäßigen Abständen $t_m$ abgetastet. Da die Flanken der übertragenen Impulse jedoch nicht ideal unendlich steil sind, sondern eine endliche Steigung aufweisen, wobei die Steigung durch die Umwelteinflüsse von Impuls zu Impuls, insbesondere von Radimpuls zu Radimpuls unterschiedlich sein kann, kann ein Fehler bei der Bestimmung der Zeitbasis entstehen, so daß diese nicht mehr der Breite der Datenimpulse entspricht. Dieses erweist sich in der o.g. früheren Anmeldung als nachteilig, da sich dieser Fehler bei der Datenaufbereitung akkumulieren kann, so daß die maximale Anzahl von Daten, die zwischen zwei Radimpulsen sicher aufbereitet werden können, begrenzt ist.

Das obige Problem wurde anhand einer Anwendung im Fahrzeugbau beschrieben. Es kann sich aber auch bei anderen Anwendungen ergeben.

Aufgabe der Erfindung ist es daher, Verfahren und eine Vorrichtung zur Aufbereitung eines Signals, das Daten codiert übermittelt, anzugeben, die eine zuverlässige Decodierung der übertragenen Daten erlauben und die Anzahl zu übertragender Daten nicht einschränken.

Diese Aufgabe wird mit den Merkmalen der unabhängigen Ansprüche gelöst. Abhängige Ansprüche sind auf bevorzugte Ausführungsformen der Erfindung gerichtet.

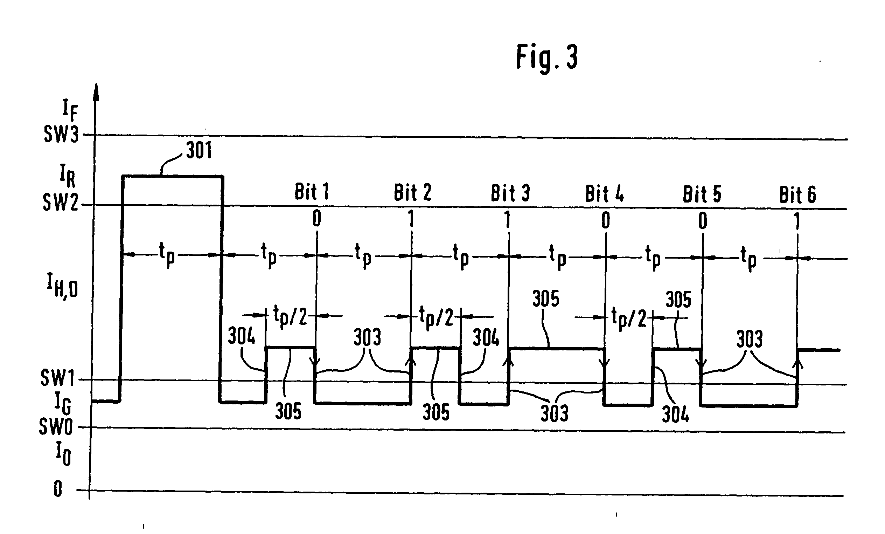

Bevor erfindungsgemäße Ausführungsformen näher beschrieben werden, wird bezugnehmend auf Fig. 3 ein erfindungsgemäßes Codierverfahren erläutert. Ein vom Sensor 107 kommendes ideales Signal kann dementsprechend beschaffen sein. Dort sind die binären Daten nicht amplitudencodiert, sondern flankencodiert. Das Signal enthält einen Radimpuls 301 und Datenimpulse 305 mit Datenflanken 303, wobei die Breite des Radimpulses 301 wiederum tp ist und die Daten mit dem Zeittakt tp codiert wurden, d.h. die Datenflanken 303 haben idealerweise einen Abstand von tp voneinander. Für die Amplituden der Impulse gilt vorzugsweise dasselbe wie in Fig. 2. Die codierten Daten zeigen wie in Fig. 2 die beispielhafte Bitfolge von 011001, wobei hier eine ansteigende Datenflanke eine logische "1" und eine abfallende Datenflanke eine logische "0" zeigt. Natürlich können die Flanken auch die umgekehrten Bitwerte oder noch andere Werte zeigen. In Fig. 3 ist zu sehen, daß eine Zwischenflanke 304 notwendig ist, wenn z.B. aufeinanderfolgende Bits mit dem gleichen logischen Wert übertragen werden sollen, da z.B. zwei aufeinanderfolgende codierte abfallende Flanken nur übertragen werden können, wenn dazwischen eine aufsteigende Flanke liegt. Die Zwischenflanken 304 tragen keine Dateninformation und dürfen deshalb empfängerseitig nicht aufbereitet werden.

Die Abfolge aus einem Radimpuls 301 und Datenimpulsen 305 wird ebenso wie die Signalfolge in Fig. 2 periodisch abgegeben. Die Raddrehzahl kann dann wiederum aus dem Abstand aufeinanderfolgender Radimpulse 301 ermittelt werden. Zwischen aufeinanderfolgenden Radimpulsen 301 wird in Abhängigkeit vom zeitlichen Abstand der Radimpulse 301 eine geeignete Anzahl von Datenimpulsen 305 mit o.g. weiteren Informationen übertragen.

Auch hier müssen die Zeitverhältnisse zwischen Radimpuls, Datenimpuls und Impulspause empfängerseitig bekannt sein. Wenn der Sender, wie oben beschrieben, in rauher Umgebung eingesetzt ist, so daß aufgrund wechselnder Umwelteinflüsse die Signalflanken, insbesondere die Radimpulsflanken unterschiedlich steil sind, kann der Zeittakt, auf dessen Grundlage die Codierung erfolgt, empfängerseitig nur ungenau bestimmt werden. Dieses stellt ein Problem dar. Außerdem kann der Zeittakt selbst aufgrund der rauhen Umgebung Schwankungen unterliegen. Es kann dann nicht von einer festen Zeitbasis ausgegangen werden. Vielmehr kann der Zeittakt variieren, so daß er von Fall zu Fall dem Empfänger neu mitgeteilt werden muß.

Erfindungsgemäß wird mit dem übertragenen Signal eine Information über den Zeittakt, auch als Codiertakt bezeichnet, übertragen, auf dessen Grundlage die Codierung erfolgte. Dabei ist mit Codiertakt der Takt gemeint, mit dem die Datenbits aufeinanderfolgen. Dieses muß nicht der Arbeitstakt einer Codierschaltung und auch nicht der Arbeitstakt einer Schaltung zur Aufbereitung der Daten sein, kann aber nach Maßgabe eines solchen Schaltungstaktes gewählt werden. Empfängerseitig wird diese den Codiertakt betreffende Information als eine Zeitkonstante ermittelt. Nach deren Maßgabe wird die weitere Aufbereitung des empfangenen Signals vollzogen.

Nach Maßgabe der Zeitkonstante wird ein Zeitpunkt oder ein Zeitfenster gesetzt, zu dem bzw. in dem ein erster Signalteil, der eine erste Flanke hat, aufbereitet wird. Weiterhin wird nach Maßgabe der Zeitkonstante und in Abhängigkeit vom Zeitpunkt der ersten Flanke ein zweiter Zeitpunkt bzw. ein zweites Zeitfenster gesetzt, zu dem bzw. in dem ein zweiter Signalteil aufbereitet wird. Dabei ist ein Zeitfenster ein Zeitbereich, in dem die Erkennung von Flanken oder allgemein die Signalaufbereitung zugelassen ist. Ein weiteres Zeitfenster wird jeweils ausgehend von einer in einem vorherigen Zeitfenster erkannten Signalflanke gesetzt, wobei der Zeitpunkt des Beginns und die Breite des Zeitfensters von der Zeitkonstante abhängen. Wird in diesem Zeitfenster eine weitere Flanke erkannt, so kann diese Flanke als neuer Ausgangspunkt für ein weiteres Zeitfenster genommen werden. Ein Vorteil besteht darin, daß eine früher oder später als erwartet kommende Flanke erkannt werden kann, da innerhalb eines Zeitbereiches um den erwarteten Zeitpunkt einer Flanke eine Flankenerkennung möglich ist. Ein weiterer Vorteil besteht darin, daß sich dadurch, daß angepaßt an den tatsächlichen Zeitpunkt einer Flanke ein neuer Flankenerkennungszeitbereich festgelegt wird, ein Fehler bei der Bestimmung der Zeitkonstante nicht akkumulieren kann, wodurch wiederum die maximale Anzahl von Daten, die zwischen zwei Radimpulsen sicher aufbereitet werden können, nicht begrenzt ist.

Vorzugsweise erfolgt die Übermittlung der den Codiertakt betreffenden Information zu Beginn der Datenübertragung. Dann kann die Zeitkonstante auch zu Beginn der Aufbereitung ermittelt werden, so daß die jeweils neueste Information zur Aufbereitung der folgenden Daten verwendet werden kann. Bei "oft" wiederkehrenden Signalfolgen kann aber auch eine in einem früheren Zyklus gewonnene Zeitkonstante für einen nachfolgenden Zyklus verwendet werden. Die gewonnene Zeitkonstante kann beispielsweise einer Bitdauer oder z.B. bei flankencodierten Daten dem zeitlichen Abstand zwischen zwei Datenflanken im empfangenen Signal entsprechen oder zumindest eine Rückschluß darauf erlauben, wenn binär codiert wurde, beispielsweise über einen proportionalen Zusammenhang. Bei Pulsbreitenmodulation kann die gewonnene Zeitkonstante eine mittlere Impulsdauer bezeichnen oder ähnliches.

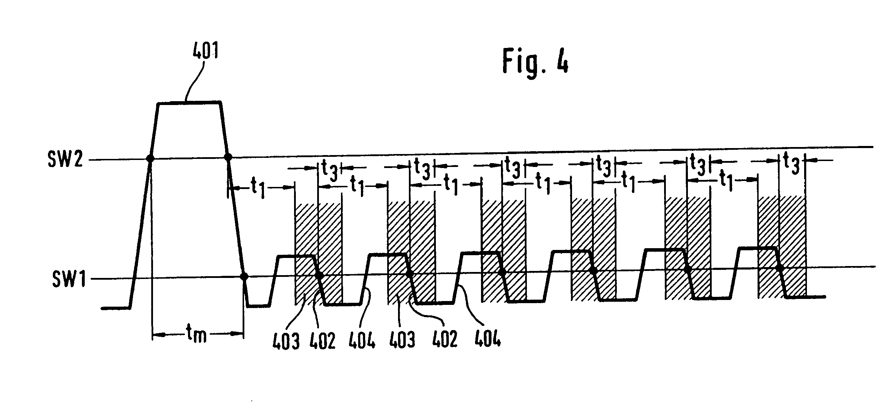

Fig. 4 verdeutlicht eine Ausführungsform des erfindungsgemäßen Verfahrens zur Aufbereitung eines empfangenen Signals, das Daten codiert übermittelt. Das Signal weist Impulse mit realen, endlich steilen Flanken auf. Die Breite oder Zeitdauer des Radimpulses 401 wird als Zeitkonstante $t_m$ bestimmt. Hierbei wird die Breite als Zeitdauer zwischen dem Zeitpunkt des Überschreitens des zweiten Schwellenwertes SW2 und dem Unterschreiten des ersten Schwellenwertes SW1 bestimmt. Die Zeitkonstante $t_m$ kann aber auch anders festgelegt sein, z.B. als Zeitdauer zwischen Über- und Unterschreiten des ersten Schwellenwertes SW1 oder zweiten Schwellenwertes SW2 oder noch anders.

Die grauen Bereiche sind Zeitfenster 403, die die aufzubereitenden Datenflanken 402 umgeben. Die hellen Bereiche dazwischen enthalten Zwischenflanken 404, die bei der Datenaufbereitung nicht berücksichtigt werden dürfen, da sie keine Dateninformation tragen. Nur eine Flanke, die innerhalb eines Zeitfensters 403 liegt, darf und kann als Datenflanke 402 erkannt werden. Dafür muß das Zeitfenster 403 entsprechend gewählt werden.

Nach Maßgabe der Zeitkonstante $t_m$ werden zwei Zeitdauern $t_1$ und $t_3$ bestimmt, wobei die erste Zeitdauer $t_1$ das Öffnen eines Zeitfensters 403 und die dritte Zeitdauer $t_3$ das Schließen eines Zeitfensters 403 bestimmt. Dabei wird ein geöffnetes Zeitfenster 403 ausgehend von einer in diesem Zeitfenster 403 erkannten Flanke 402 nach der dritten Zeitdauer $t_3$ geschlossen. Ein nächstes Zeitfenster 403 wird ausgehend von der im vorigen Zeitfenster 403 erkannten Flanke 402 nach einer ersten Zeitdauer $t_1$ geöffnet. Hierbei bedeuten "Öffnen" eines Zeitfensters 403 den Beginn und "Schließen" eines Zeitfensters 403 das Ende eines Zeitraums, in dem die Flankenerkennung zugelassen ist.

Somit bestimmt der Zeitpunkt des Erkennens einer Datenflanke 402 in einem Zeitfenster 403 den Zeitpunkt für das Schließen des momentanen und das Öffnen des nächsten Zeitfensters 403, in dem eine weitere Datenflanke 402 erwartet wird. Dabei ist es vorteilhaft, aber nicht zwingend, daß das Schließen des einen und das Öffnen des folgenden Zeitfensters 403 von derselben Flanke bzw. von der zuletzt erkannten Flanke ausgeht. Es wird davon ausgegangen, daß die Datenflanken idealerweise gleichen Abstand voneinander haben, da ja mit einem festen Codiertakt codiert wurde. Entsprechend werden auch die Zeitdauern $t_1$ und $t_3$ und damit die Zeitfenster 403 gesetzt. Die erste Zeitdauer $t_1$ muß so bestimmt werden, daß das Zeitfenster 403 erst geöffnet wird, nachdem eine eventuelle Zwischenflanke 404 aufgetreten ist. Außerdem muß ein Zeitfenster 403 vor dem Auftreten einer Zwischenflanke 404 geschlossen werden. Kommt eine Datenflanke 402 in einem Zeitfenster 403 zu früh oder zu spät, so wirkt sich dieses nicht negativ auf die Erkennung der folgenden Datenflanken 402 aus, da die Zeitfenster 403 adaptiv in Abhängigkeit von jeweils einer vorherigen, vorzugsweise der zuletzt erkannten Datenflanke 402 gesetzt und somit nicht starr nach einem festen Zeitschema festgesetzt werden. Ein fehlerhafte Bestimmung der Zeitkonstante $t_m$ kann sich deshalb ebenfalls nicht in großem Maße auswirken, da sich dieser Fehler für jedes Zeitfenster gleich auswirkt und nicht akkumuliert. Dadurch, daß die Aufbereitung nicht zu bestimmten Zeitpunkten, sondern irgendwann innerhalb eines breiteren Zeitraums (Zeitfenster) geschieht, besteht die Möglichkeit, auch zu früh oder zu spät kommende Datenflanken zu erkennen, wobei das Zeitfenster nur so breit gewählt werden darf, daß die Zwischenflanken 404 nicht erkannt werden.

Sind die Daten nicht flankencodiert, sondern z.B. amplitudencodiert und sollen zu bestimmten Zeitpunkten aufbereitet werden, so kann statt des Zeitfensters ein Zeitpunkt nach Maßgabe der Zeitkonstante $t_m$ zum Datenaufbereiten bestimmt werden, wobei der Zeitpunkt in Abhängigkeit vom Zeitpunkt einer Signalflanke gesetzt wird. Verschiedene Ausführungsformen der Erfindung werden nun anhand der in den Zeichnungen dargestellten Ausführungsbeispiele näher erläutert. Dabei zeigen:

Fig. 1    ein Anwendungsbeispiel der Erfindung im Fahrzeugbau,

Fig. 2      einen bekannten idealen Signalverlauf,

Fig. 3      einen erfindungsgemäßen idealen Signalverlauf,

Fig. 4      einen erfindungsgemäßen realen Signalverlauf mit einer schematischen Darstellung einer Ausführungsform des erfindungsgemäßen Verfahrens,

Fig. 5      einen erfindungsgemäßen realen Signalverlauf einer schematischen Darstellung einer weiteren Ausführungsform des erfindungsgemäßen Verfahrens,

Fig. 6      ein Blockdiagramm einer Ausführungsform einer erfindungsgemäßen Vorrichtung,

Fig. 7      zwei Zeitdiagramme zur Verdeutlichung von erfindungsgemäßen Ausführungsformen,

Fig. 8      zwei reale erfindungsgemäße Signalverläufe mit einer schematischen Darstellung einer weiteren Ausführungsform des erfindungsgemäßen Verfahrens,

Fig. 9      eine Ausführungsform einer Schaltung der erfindungsgemäßen Vorrichtung, und

Fig. 10     eine graphische Darstellung einer "state machine".

Fig. 3 zeigt einen idealen Signalverlauf für flankencodierte Daten, wobei das Verfahren, bei dem die Daten flankencodiert übertragen werden, ebenfalls als Erfindung betrachtet wird. Das Signal weist Impulse auf, von denen vorzugsweise der erste ein Radimpuls 301 ist und die weiteren Imulse Datenimpulse 305 mit codierten Datenflanken 303 und Zwischenflanken 304 sind. Die Datenflanken 303 haben einen Abstand tp voneinander, und der Abstand zwischen einer Daten- 303 und Zwischenflanke 304 beträgt vorzugsweise tp/2. Die erste Datenflanke 303 tritt nach der Zeit tp nach der abfallenden Flanke des Radimpulses 301 auf. Da diese Datenflanke 303 in diesem Fall ebenfalls eine fallende Flanke ist, wird zwischen den beiden abfallenden Flanken eine Zwischenflanke 304 gesendet.

Ein erfindungsgemäßes Signal besteht vorzugsweise aus unterscheidbaren Impulsen, wobei die Impulse vorzugsweise Stromimpulse sind, aber auch z.B. Spannungsimpulse sein können. Dabei ist die Amplitude des Radimpulses vorzugsweise höher als der zweite Schwellenwert SW2 und niedriger als ein dritter Schwellenwert SW3. Damit kann er von den übrigen Impulsen, deren Amplitude vorzugsweise höher als der erste Schwellenwert SW1, aber niedriger als der zweite Schwellenwert SW2 ist, unterschieden werden. Ist eine Impulsamplitude höher als der dritte Schwellenwert SW3, so kann er ebenso wie eine Amplitude, die niedriger als der unterere Schwellenwert SW0 ist, als Fehler erkannt werden. Somit können in dieser Ausführungsform fünf Amplitudenbereiche unterschieden werden: Ein fehlerhafter Bereich $I_0$ unterhalb SW0, ein Bereich $I_G$ zwischen SW0 und SW1, in dem das Signalminimum auf einem Niveau liegt, das die Energieversorgung des aktiven Sensors 107 darstellt, ein Bereich $I_{H,D}$ zwischen SW1 und SW2, in dem die Amplituden der Datenimpulse 305 bzw. eines im folgenden näher beschriebenen Hilfsimpulses liegen, ein Bereich $I_R$ zwischen SW2 und SW3 für die Amplitude eines Radimpulses 301 und ein oberer fehlerhafter Bereich $I_F$ oberhalb von SW3.

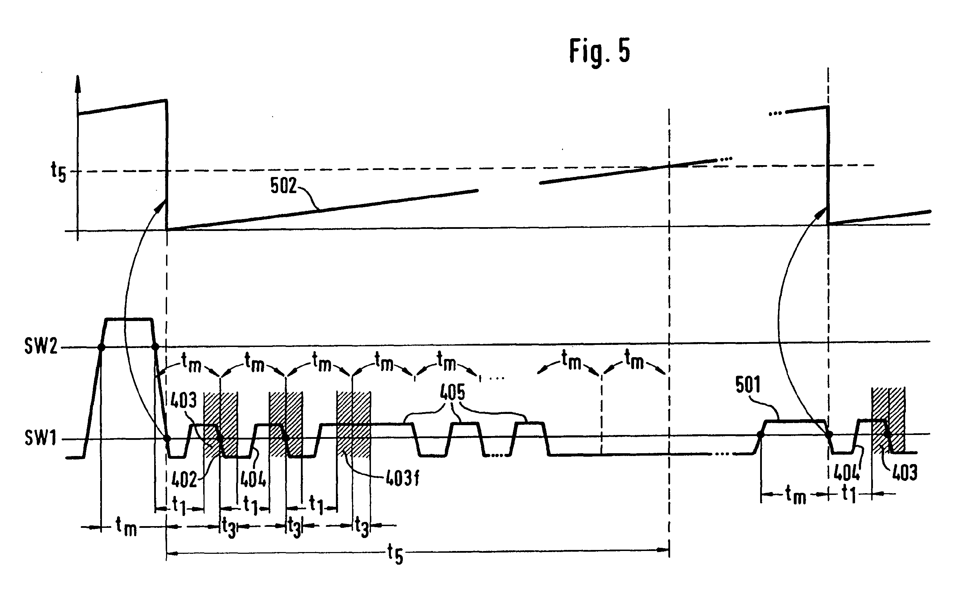

Wenn sich das Rad sehr langsam bewegt oder stillsteht, wird der Radimpuls 401 durch einen Hilfsimpuls 501 wie in Fig. 5 gezeigt ersetzt. Da ein Hilfsimpuls 501 vorzugsweise in etwa die gleiche Amplitude wie ein Datenimpuls 405 hat, muß er von diesem auf eine andere Weise zu unterscheiden sein. Senderseitig und empfängerseitig ist beispielsweise die maximale Anzahl $A_B$ von zwischen zwei Radpulsen zu übertragenden Datenbits bekannt. Vorzugsweise ist $A_B = 9$. Empfängerseitig kann dann eine fünfte Zeitdauer $t_5$ nach Maßgabe der Zeitkonstante $t_m$ bestimmt werden, innerhalb derer die maximale Anzahl $A_B$ von Datenbits ausgehend vom Ende eines vorherigen, vorzugsweise letzten Rad- oder Hilfsimpulses übertragen werden. Das Ende eines Rad- oder Hilfsimpulses kann dabei das Unterschreiten des ersten Schwellenwertes SW1 sein. Dann wird die Zeitdauer $t_5$ abgewartet, bis frühestens ein Impuls, der eine Amplitude im Bereich $I_{H,D}$ aufweist, als Hilfsimpuls 501 und nicht als Datenimpuls 305 erkannt wird, vorausgesetzt, es ist in der Zwischenzeit kein Radimpuls 401 aufgetreten. Die Zeitdauer $t_5$ kann ein ganzzahliges Vielfaches n der Zeitkonstante $t_m$ sein, wobei n ≥ $A_B$ + 1, vorzugsweise n = $A_B$ + 2 gilt. Auch der Hilfsimpuls hat vorzugsweise dieselbe Breite $t_m$ wie der Radimpuls 401 und kann somit die Information über den Codiertakt tragen.

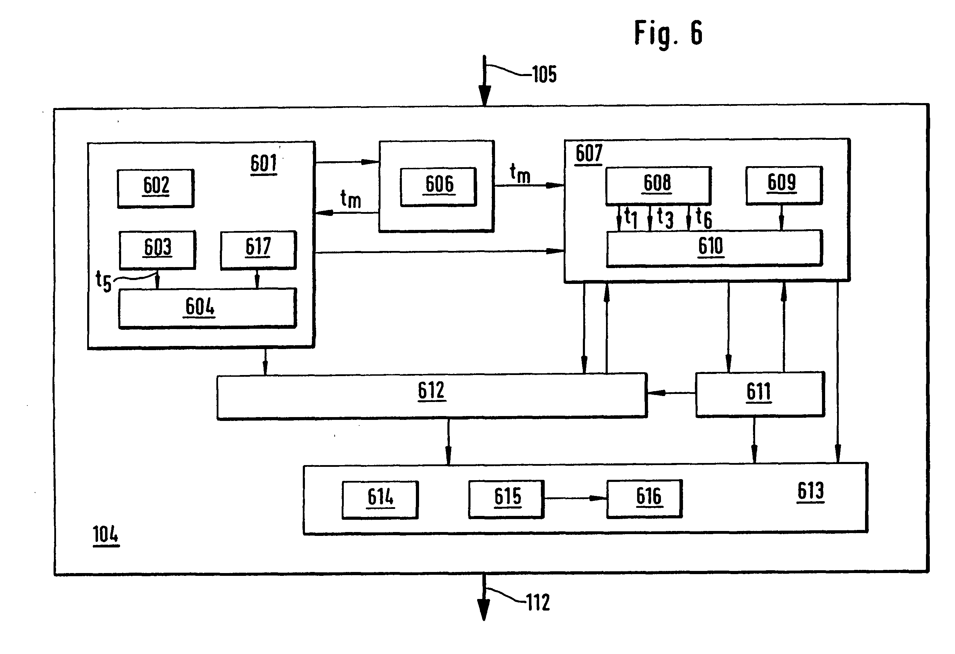

In Fig. 6 ist eine Ausführungsform der erfindungsgemäßen Vorrichtung 104 dargestellt. Die Vorrichtung 104 erhält über die Leitung 105 die vom Sensor 107 kommenden Signalimpulse. Die Signalimpulse können mehreren Einrichtungen innerhalb der Vorrichtung 104 zugeführt werden. Sie werden von einer Impulserkennungseinrichtung 601 ausgewertet. Dafür weist die Impulserkennungseinrichtung 601 eine Schwellenwertvergleichseinrichtung 602 auf, die die Signalimpulse z.B. mit den in Fig. 3 dargestellten Schwellenwerten SW0, SW1, SW2 und SW3 vergleicht. Entsprechend dem Ergebnis des Vergleiches entscheidet die Impulserkennungseinrichtung 601, ob es sich um einen Rad- 401, Daten- 405 bzw. Hilfsimpuls 501 oder einen Fehler handelt.

Hat die Impulserkennungseinrichtung 601 einen Rad- 401 oder Hilfsimpuls 501 erkannt, wird ein erster Zähler 606 einer ersten Ermittlungseinrichtung 605 zurückgesetzt und gestartet. Der erste Zähler 606 wird angehalten, wenn der Rad-401 oder Hilfsimpuls 501 den ersten Schwellenwert SW1 unterschritten hat. Die erste Ermittlungseinrichtung 605 ermittelt daraus die Zeitkonstante $t_m$, die sie an eine Zeitfenstersetzeinrichtung 607 und an die Impulserkennungseinrichtung 601 weitergibt.

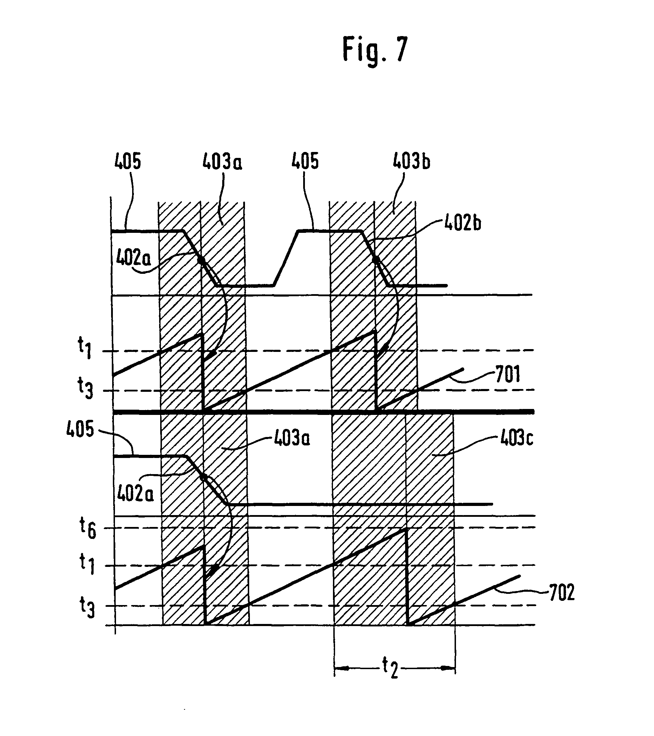

Die Zeitfenstersetzeinrichtung 607 weist eine zweite Ermittlungseinrichtung 608 auf, die die erste $t_1$, dritte $t_3$ und eine sechste Zeitdauer $t_6$, die das Öffnen und Schließen eines Zeitfensters 403 bestimmen, ermittelt und entsprechende Werte, die der Einfachheit halber auch mit $t_1$, $t_3$ und $t_6$ bezeichnet werden, an eine erste Zeitdauervergergleichseinrichtung 610 weitergibt. Der Stand eines zweiten Zählers 609 wird in der ersten Zeitdauervergleichseinrichtung 610 mit den Werten $t_1$, $t_3$ und $t_6$ verglichen. In Abhängigkeit vom Ergebnis dieses Vergleichs öffnet oder schließt die Zeitfenstersetzeinrichtung 607 ein Zeitfenster 403. Näheres hierzu wird später bezugnehmend auf Fig. 7 beschrieben. Der Ausgang der Zeitfenstersetzeinrichtung 607 ist mit einer Flankenerkennungseinrichtung 611, einer Fehlererkennungseinrichtung 612 und mit einer Speichereinrichtung 613 verbunden, um den jeweiligen Einrichtungen mitzuteilen, wann ein Zeitfenster 403 geöffnet ist.

Die Impulserkennungseinrichtung 601 weist eine dritte Ermittlungseinrichtung 603 auf, die eine Zeitdauer $t_5$ ermittelt und einen entsprechenden Wert, der im folgenden der Einfachheit halber auch mit $t_5$ bezeichnet wird, an eine zweite Zeitdauervergleichseinrichtung 604 weitergibt. Dort wird der Zählerstand eines dritten Zählers 617 mit $t_5$ verglichen. Der dritte Zähler 617 kann dann, wenn er bis $t_5$ gezählt hat, angehalten werden oder weiterzählen. Ist der Zählerstand des dritten Zählers 617 größer oder gleich $t_5$, so erkennt die Impulserkennungseinrichtung 601 einen Impuls im Bereich $I_{H,D}$ als Hilfsimpuls 501, ansonsten als Datenimpuls 405. Von der Impulserkennungseinrichtung 601 erhält die Zeitfenstersetzeinrichtung 607 Nachricht, wenn der dritte Zähler 617 bis $t_5$ gezählt hat, so daß die Zeitfenstersetzeinrichtung 607 keine neues Zeitfenster 403 öffnet.

In Fig. 5 ist der Zählerstand 502 des dritten Zählers 617 über einem beispielhaften Signalverlauf dargestellt.

Der dritte Zähler 617 wird zurückgesetzt und neu gestartet, wenn ein Rad- 401 oder Hilfsimpuls 501 den ersten Schwellenwert SW1 unterschritten hat.

Hat die Flankenerkennungseinrichtung 611 eine Flanke in einem geöffneten Fenster erkannt, gibt sie das Ergebnis an die Speichereinrichtung 613 weiter, wo das erkannte Datenbit in einem Datenspeicher 614 gespeichert wird. Außerdem gibt die Flankenerkennungseinrichtung 611 bei Erkennen einer Flanke im Zeitfenster ein Signal an die Zeitfenstersetzeinrichtung 607 und an die Fehlererkennungseinrichtung 612 weiter. Die Fehlererkennungseinrichtung 612 ist mit der Impulserkennungseinrichtung 601 verbunden und erfährt z.B. von ihr, ob ein Radimpuls 401 vorliegt. Erkennt die Fehlererkennungseinrichtung 612 eine Fehler, teilt sie dieses der Zeitfenstersetzeinrichtung 607 mit, so daß diese keine neues Zeitfenster 403 öffnet. Je nachdem, ob die Fehlererkennungseinrichtung 612 einen Fehler in einem Zeitfenster erkennt, setzt die Gültigkeitssetzeinrichtung 615 im Gültigkeitsspeicher 616 ein Gültigkeitsbit, wobei z.B. ein gesetztes "1"-Bit ein gültiges Datenbit und ein gesetztes "0"-Bit ein fehlerhaftes und damit ungültiges Datenbit anzeigen kann. Über die Leitung 112 können die Daten- und Gültigkeitsbits ausgelesen und einer Decodiereinrichtung 103 gemäß Fig. 1 zugeführt werden.

In Fig. 7 sind gemäß einer erfindungsgemäßen Ausführungsform verschiedene Signalverläufe, zugehörige Zählerstände 701, 702 des zweiten Zählers 609 sowie Zeitfenster 403 dargestellt. Oben in der Fig. 7 sind zwei Datenflanken 402a,b mit den sie umgebenden Zeitfenstern 403a,b und darunter der Zählerstand 701 des zweiten Zählers 609 dargestellt. Der zweite Zähler 609 wird zurückgesetzt und erneut gestartet, wenn in einem Zeitfenster 403a eine Datenflanke 402a erkannt wird. Wenn er danach einen der dritten Zeitdauer $t_3$ entsprechenden Wert erreicht hat, wird das Zeitfenster 403a, in dem die Datenflanke 402a erkannt wurde, geschlossen. Der zweite Zähler 609 zählt weiter. Wenn er einen der ersten Zeitdauer $t_1$ entsprechenden Wert erreicht hat, wird ein neues Zeitfenster 403b geöffnet. Der zweite Zähler 609 zählt weiter und wird erst zurückgesetzt, wenn im neuen Zeitfenster 403b eine Datenflanke 402b erkannt wird.

Tritt der Fall ein, daß in einem geöffenten zeitfenster 403c eine Flanke spät oder gar nicht auftritt, so wird entsprechend dem unteren Teil der Fig. 7 verfahren. Dort ist - ein Signalverlauf mit nur einer Datenflanke 402a und zwei Zeitfenstern 403a,c und der zugehörige Stand 702 des zweiten Zählers 609 dargestellt. Der zweite Zähler 609 wird wieder bei Erkennen der Datenflanke 402a im ersten Zeitfenster 403a zurückgesetzt und erneut gestartet. Das Zeitfenster 403a wird wie oben beschrieben geschlossen und eine neues Zeitfenster 403c nach entsprechendem Zählerstand geöffnet. Der zweite Zähler 609 zählt solange, bis er den der sechsten Zeitdauer $t_6$ entsprechenden Wert erreicht hat. Obwohl bis dahin keine Flanke im geöffneten Zeitfenster 403c erkannt wurde, wird er nun trotzdem zurückgesetzt und erneut gestartet. Dann wird das Zeitfenster 403c wie üblich nach der dritten Zeitdauer $t_3$ geschlossen. Tritt doch noch eine Flanke nach dem Zurücksetzen des zweiten Zählers 609 im geöffneten Zeitfenster 403c auf, so wird der zweite Zähler 609 wieder zurückgesetzt und neu gestartet und das Zeitfenster 403c nach einer weiteren Zeitdauer $t_3$ geschlossen. Anders gesagt muß demnach innerhalb einer zweiten Zeitdauer $t_2$ nach Öffnen eines Zeitfensters 403 eine Flanke erkannt worden sein, sonst wird das zeitfenster 403 wieder geschlossen. Die zweite Zeitdauer $t_2$ läßt sich aus den Zeitdauern $t_1$, $t_3$ und $t_6$ wie folgt ermitteln:

$$t_2 = t_6 - t_1 + t_3.$$

Die Zeitdauern $t_1$, $t_3$ und $t_6$ werden vorzugsweise wie folgt festgelegt:

$$t_1 = t_m / 2 + Dt,$$

$$t_3 = t_m / 4,$$

$$t_6 = t_m.$$

Dabei wird die positive vierte Zeitdauer Dt z.B. in Abhängigkeit von der Dauer der abfallenden Flanke des Rad- 401 oder Hilfsimpulses 501 und/oder der Datenflanken 402 (ansteigend oder abfallend) und/oder der Zeitkonstante $t_m$ ermittelt. Im optimalen Fall, wenn $t_m$ gleich dem Codiertakt ist, gilt vorzugsweise $Dt = t_m / 4$.

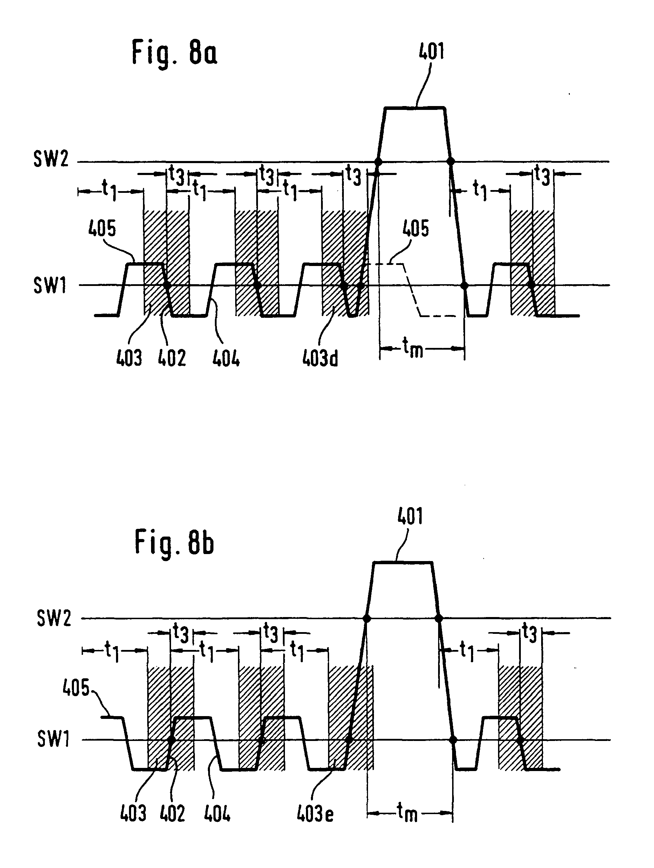

Wird in einem Zeitfenster 403c keine Flanke erkannt, so erkennt die Fehlererkennungseinrichtung 612 einen Fehler. Weitere Fehlermöglichkeiten, die von der Fehlererkennungseinrichtung 612 erkannt werden können, sind in Fig. 8 dargestellt. Betrachtet wird in Fig. 8a und Fig. 8b jeweils das Zeitfenster 403d,e. Im ersten Fall der Fig. 8a werden im genannten Zeitfenster 403d zwei Flanken erkannt. Die zweite Flanke kann z.B. die ansteigende Flanke eines Radimpulses 401 oder eine zwischen- 404 oder Datenflanke 402 eines Datenimpulses 405 sein. Die Fehlererkennungseinrichtung 612 erkennt z.B. einen Fehler, wenn mehr als eine Flanke in einem Zeitfenster 403 erkannt wird. Sie veranlaßt dann die Gültigkeitssetzeinrichtung 615 dazu, ein Gültigkeitsbit, das ein fehlerhaftes Datenbit anzeigt, zu setzen. Handelt es sich bei der zweiten erkannten Flanke um eine ansteigende Flanke eines Radimpulses 401, so wird dessen Breite $t_m$ von der ersten Ermittlungseinrichtung 605 ermittelt, worauf eine erneute Datenaufbereitung erfolgen kann.

Dasselbe gilt für den in Fig. 8b dargestellten Fall. Dort wird im Zeitfenster 403e zwar nur eine Flanke erkannt, diese ist aber die ansteigende Flanke eines Radimpulses 401. Diese wird dadurch erkannt, daß der Radimpuls 401 während des geöffneten Zeitfensters 403 den Schwellenwert SW2 überschreitet. Deshalb ist die dritte Zeitdauer $t_3$ vorzugsweise länger als die Zeit, die ein Radimpuls braucht, um nach Überschreiten des ersten Schwellenwertes SW1 den zweiten Schwellenwert SW2 zu überschreiten. Dann erkennt die Fehlererkennungseinrichtung 612 einen Fehler, worauf wiederum ein entsprechendes Gültigkeitsbit gesetzt wird. Wenn in der Datenübertragung auch ein Paritybit (z.B. als letztes Datenbit) gesendet wird, wird bei einer Fehlererkennung des Paritybits vorzugsweise nicht nur das entsprechende Gültigkeitsbit gesetzt, sondern es werden alle Gültigkeitsbits gesetzt. Der Radimpuls 401 wird wiederum von der ersten Ermittlungseinrichtung 605 vermessen, woraufhin eine erneute Datenaufbereitung für den Folgezyklus beginnen kann.

Erkennt die Fehlererkennungseinrichtung 612 einen Fehler, werden die Datenaufbereitung abgebrochen und alle folgenden Datenbits solange nicht aufbereitet, bis wieder ein Rad-401 oder Hilfsimpuls 501 aufgetreten ist. Dieses ist am Beispiel einer in einem Zeitfenster 403 nicht auftretenden Flanke in Fig. 5 gezeigt. Dort wird im Zeitfenster 403f keine Flanke erkannt und somit die weitere Aufbereitung von Daten dadurch beendet, daß kein weiteres Zeitfenster 403 geöffnet wird. Die nachfolgenden Datenimpulse 405 werden quasi ignoriert.

Vorzugsweise stellt jedes Datenbit für sich eine einzelne Information wie z.B. Bremsenverschleiß oder Bremsentemperatur dar. Es handelt sich dabei z.B. um eine Ja/Nein- oder OK/nicht-OK-Information. So kann eine logische 1 eine zulässige und eine logische 0 eine unzulässige Bremsentemperatur anzeigen. Andere Informationen, z.B. analoge Signale, können auch durch Kombination mehrerer Datenbits dargestellt werden. Die Datenbits weisen vorzugsweise eine Priorität auf. Das erste Datenbit ist das wichtigste, das die wichtigste Information trägt und so häufig wie möglich übertragen werden sollte, und das letzte Datenbit hat die niedrigste Priorität, da diese eine weniger wichtige Information anzeigt. Damit ist es akzeptabel, daß bei einer fehlerhaften Übertragung oder bei großen Radgeschwindigkeiten die hinteren Bits nicht aufbereitet werden. Vorzugsweise wird als letztes Bit ein Paritybit gesendet. Die Definition des Paritybits, z.B. gerade oder ungerade Parity, muß zwischen Sender und Empfänger vereinbart werden. Bei einer fehlerfreien Übertragung wird die Datenaufbereitung beendet, wenn die maximale Anzahl $A_B$ von aufzubereitenden Datenbits aufbereitet wurde, d.h., dann wird solange kein Zeitfenster 403 mehr geöffnet, bis ein erneuter Rad- 401 bzw. Hilfsimpuls 501 aufgetreten ist.

Der Datenspeicher 614 kann so bemessen sein, daß er gerade die maximale Anzahl $A_B$ von aufzubereitenden Datenbits aufnehmen kann, also vorzugsweise 9 Bit. Er kann aber auch größer sein, um z.B. noch weitere Informationsbits zu speichern. Der Gültigkeitsspeicher 616 ist vorzugsweise so aufgebaut, daß er für jedes Datenbit ein entsprechendes Gültigkeitsbit enthält. Er könnte aber z.B. auch nur anzeigen, ab welchem Datenbit die Datenbits ungültig sind, oder noch anders aufgebaut sein. Die Gültigkeitssetzeinrichtung 615 setzt dann entsprechend mindestens ein Gültigkeitsbit, vorzugsweise aber für jedes aufzubereitende Datenbit ein Gültigkeitsbit.

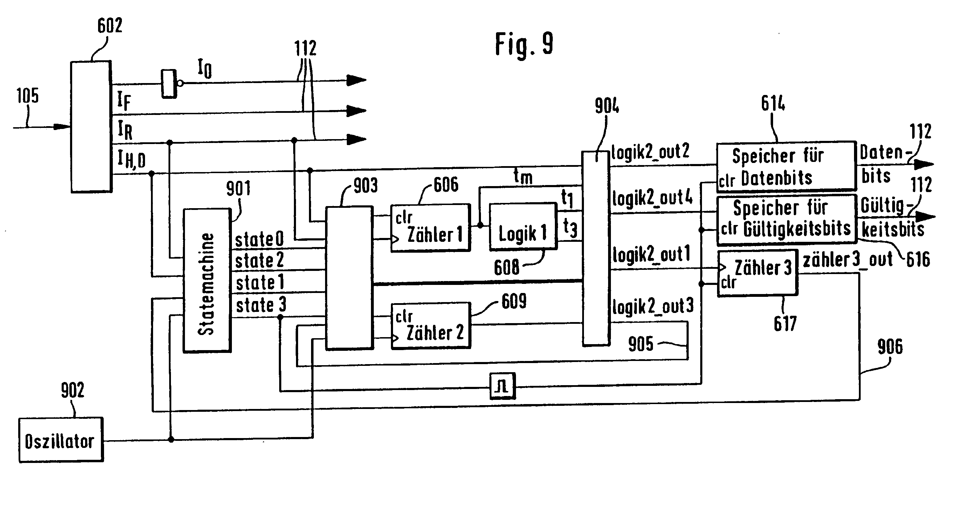

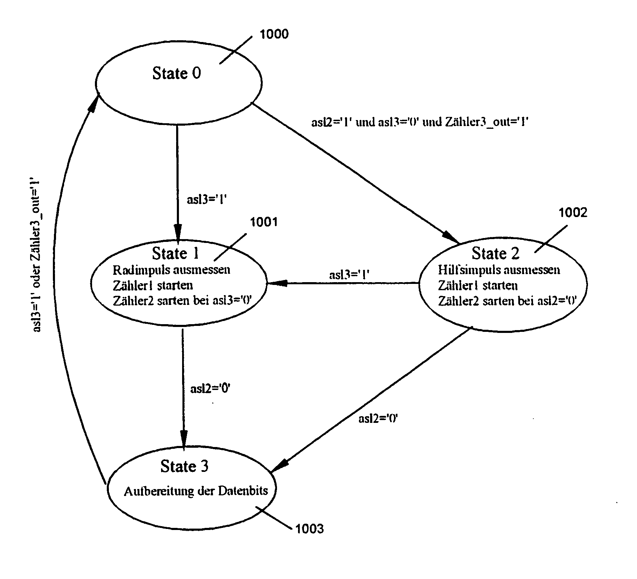

Fig. 9 zeigt eine konkretere Ausführungsform einer erfindungsgemäßen Vorrichtung. In ihr ist unter anderem das Konzept einer "state machine" 901 verwirklicht. Bevor die Schaltung nach Fig. 9 erläutert wird, wird die Arbeitsweise der state machine 901 bezugnehmend auf Fig. 10 erläutert.

Vor dem Einlaufen entweder eines Radimpulses 401 oder eines Hilfsimpulses 501 befindet sich die Schaltung im Ruhezustand 1000 (State 0). Sie empfängt keine Daten und führt keine besonderen Maßnahmen aus. Sobald eine steigende Flanke erkannt wird (weil die Amplitude den ersten Schwellenwert SW1 überschreitet), geht sie in den Zustand 1002 (State 2) über, in dem mit der Ausmessung eines Hilfsimpulses 501 begonnen wird. Wird im weiteren Verlauf auch der zweite Schwellenwert SW2 überschritten, wird in den Zustand 1001 (State 1) übergegangen, in dem die Pulsbreite des Radimpulses 401 ausgemessen wird. Es kann auch der Fall eintreten, daß der Impulsanstieg so schnell ist, daß das Überschreiten des ersten Schwellenwertes SW1 nicht getrennt vom Überschreiten des zweiten Schwellenwertes SW2 wahrgenommen wird. Es wird dann direkt vom Zustand State 0 1000 in den Zustand State 1 1001 übergegangen. Wird der erste Schwellenwert SW1 wieder unterschritten, wird in den Zustand 1003 (State 3) übergegangen, in dem mit der Aufbereitung der empfangenen Datenflanken 402 begonnen wird. Ist dies beendet, wird wieder in den Zustand State 0 1000 übergegangen. Die Zustandsübergänge finden demnach im wesentlichen nach Maßgabe der Schwellenwertentscheidungen statt.

In Fig. 9 werden die Signalimpulse über die Leitung 105 der Schaltung zugeführt. Dort wird das Signal in der Schwellenwertvergleichseinrichtung 602 z.B. mit den Schwellenwerten SW0, SW1, SW2 und SW3 verglichen, wobei am Ausgang der Schwellenwertvergleichseinrichtung 602 die vier Amplitudenbereiche bzw. Signale $I_0$, $I_F$, $I_R$ und $I_{H,D}$ gemäß Fig. 3 angezeigt werden. Die Fehlersignale $I_0$ und $I_F$ können danach z.B. einer Einrichtung zur Fehlerbehebung (nicht gezeigt) zugeführt werden. Das Radsignal $I_R$ kann einer Einrichtung zur Bestimmung der Radgeschwindigkeit (nicht gezeigt) zugeführt werden. 901 ist die state machine, die die relevanten Amplitudensignale von der Schwellenwertvergleichseinrichtung 602 empfängt und aufgrund der Änderung dieser Signale einzelne Schaltungskomponenten in Betrieb setzt. Wenn im Zustand State 0 1000 ein Puls vom Amplitudenbereich $I_G$ in den Amplitudenbereich $I_{H,D}$ übergeht, was z.B. durch einen Wechsel des Signals $I_{H,D}$ von einer logischen "0" auf eine logische "1" angezeigt werden kann, und das Ausgangssignal 906 des dritten Zählers 502 z.b. eine logische 1 anzeigt, weil der dritte Zähler den Zählerstand $t_5$ erreicht hat, geht das Signal State 2 z.B. auf logisch 1, woraufhin der erste Zähler 606 gestartet wird, um die Breite des Hilfsimpulses 501 auszumessen. Die erste Logik 903 steuert dabei den ersten 606 und zweiten Zähler 609, indem sie z.B. die beiden Zähler 606, 609 mit dem Takt des Oszillators taktet und sie zurücksetzt und neu startet. Erreicht das Eingangssignal auch den Amplitudenbereich $I_R$, so zeigt z.B. auch das Signal $I_R$ eine logische 1, das der state machine 901 zugeführt wird. Entsprechend dem Übergang in den Zustand State 1 1001 zeigt das Signal State 1 dann z.B. eine logische 1. Die erste Logik 903 setzt daraufhin der ersten Zähler 606 zurück und startet ihn neu, um die Breite des Radimpulses 401 auszumessen. Der erste Zähler 606 hört auf zu zählen, wenn der Pulsbereich $I_{H,D}$ wieder unterschritten wird und damit z.B. die beiden Signale $I_R$ und $I_{H,D}$ eine logische 0 anzeigen.

Nachdem (im Zustand State 2) ein Hilfsimpuls oder (im Zustand State 1) ein Radimpuls ausgemessen wurde, wird in den Zustand State 3 1003 übergegangen und damit der dritte Zähler 502 gestartet. Die Aufbereitung der Daten kann nun erfolgen. Der zweite Zähler 609 wird für das Öffnen des ersten Zeitfensters 403 nach Erkennung eine Rad- 401 oder Hilfsimpulses 501 zurückgesetzt und neu gestartet, wenn z.B. der Radimpuls 401 den zweiten Schwellenwert SW2 oder der Hilfsimpuls 501 den ersten Schwellenwert SW1 unterschreitet, da vorzugsweise dann die Messung der Pulsbreite $t_m$ beendet wird. Danach wird der zweite Zähler 609 wieder zurückgesetzt und neu gestartet, wenn der zweite Zähler 609 bis $t_6$ gezählt hat, wobei in dieser Ausführungsform $t_6 = t_m$ ist, oder wenn der zweite Zähler mindestens bis $t_1$ gezählt hat und in der zweiten Logik 904 ein Wechsel des Signals $I_{H,D}$ von logisch 0 auf logisch 1 oder umgekehrt erkannt, d.h. eine Flanke in einem geöffneten Zeitfenster 403 erkannt wird. Der ersten Logik 903 wird durch das Ausgangssignal 905 der zweiten Logik 904 mitgeteilt, wann sie den zweiten Zähler 609 zurücksetzen soll.

Die Werte $t_1$ und $t_3$ für das Öffnen und Schließen eines Zeitfensters 403 werden in der zweiten Ermittlungseinrichtung 608, der vom ersten Zähler 606 einen der Zeitkonstante $t_m$ entsprechenden Wert, der Einfachheit halber auch mit $t_m$ bezeichnet, zugeführt wird, ermittelt und an die zweite Logik 904 weitergegeben. Die zweite Logik 904 erhält ebenso vom ersten Zähler 606 den Wert $t_m$ und vergleicht den Stand des zweiten Zählers 609 mit den Werten $t_6 = t_m$, $t_1$ und $t_3$. Hierbei ist die sechste Zeitdauer $t_6$ gleich der Zeitkonstante $t_m$ und braucht deshalb von der zweiten Ermittlungseinrichtung 608 nicht ermittelt zu werden. Die sechste Zeitdauer kann aber auch wie in Fig. 6 als ein anderer Wert ermittelt werden.

Die erkannte Flanke wird als Datenbit im Datenspeicher 614 je nach Codierung abgespeichert und ein entsprechendes Gültigkeitsbit im Gültigkeitsspeicher 616 abgespeichert. Dieses kann z.B. nach dem Schließen eines entsprechenden Zeitfensters 403 erfolgen, damit während des geöffneten Fensters 403 eine Fehlererkennung durchgeführt und danach das entsprechende Gültigkeitsbit gesetzt werden kann. Die Daten- und Gültigkeitsbits können über die Leitung 112 ausgelesen werden.

Die Aufbereitung wird solange durchgeführt, bis z.B. der dritte Zähler 502 bis zur Zeitdauer $t_5$ gezählt hat oder ein neuer Radimpuls 401 erkannt wird. Im ersten Fall wird in den Zustand State 0 1000 übergegangen, im zweiten in den Zustand State 2 1002.

Sind die Daten z.B. wie in Fig. 2 amplitudencodiert, so ist es denkbar, daß das Signal zu bestimmten Zeitpunkten abgetastet wird, wobei die Zeitpunkte in Abhängigkeit von der Zeitkonstante $t_m$ ausgehend von Signalflanken ausgewählt werden. Die Signalflanken können z.b. Datenflanken sein, wobei dann z.B. nach der Zeit $t_m/2$ nach einer Datenflanke das Signal abgetastet wird.

**Patentansprüche**

1. Verfahren zum Aufbereiten eines empfangenen Signals, das Daten amplitudencodiert übermittelt, wobei die Codierung der einzelnen Daten mit einem bestimmten Codiertakt erfolgte, das Signal nach Maßgabe des Codiertaktes erzeugte Flanken aufweist und das übermittelte Signal unterscheidbare Impulse aufweist,

   wobei das Signal das übermittelte Signal eines aktiven Sensors (107) eines Fahrzeugrades (106) ist, mit den Schritten:

   - Ermitteln einer nach Maßgabe des Codiertaktes gesetzten Zeitkonstante ($t_m$) aus dem empfangenen Signal, wobei die Zeitkonstante nach Maßgabe der Zeitdauer des ersten Impulses ermittelt wird und
   - Aufbereiten von Signalteilen nach dem ersten Impuls, die Flanken aufweisen, zu festgesetzten Zeitpunkten nach Maßgabe der Zeitkonstante ($t_m$),

   **gekennzeichnet durch** folgende Schritte:

   - Ermitteln eines ersten und eines zweiten Zeitpunktes nach Maßgabe der Zeitkonstante ($t_m$), wobei der zweite Zeitpunkt in Abhängigkeit vom Zeitpunkt einer beim ersten Zeitpunkt ermittelten Flanke gesetzt wird,
   - Aufbereiten eines ersten Signalteils, der eine erste Flanke hat, zum ersten Zeitpunkt,
   - Aufbereiten eines zweiten Signalanteils zum zweiten Zeitpunkt und
   - Abtasten des Signals zu einem weiteren Zeitpunkt, wobei der weitere Zeitpunkt ausgehend von einer zuvor erkannten Flanke gesetzt wird.

2. Verfahren zum Aufbereiten eines empfangenen Signals, das Daten übermittelt, wobei die Codierung der einzelnen Daten mit einem bestimmten Codiertakt erfolgte, das Signal nach Maßgabe des Codiertaktes erzeugte Flanken aufweist und das übermittelte Signal unterscheidbare Impulse aufweist, wobei das Signal das übermittelte Signal eines aktiven Sensors (107) eines Fahrzeugrades (106) ist, mit den Schritten:

   - Ermitteln einer nach Maßgabe des Codiertaktes gesetzten Zeitkonstante ($t_m$) aus dem empfangenen Signal, wobei die Zeitkonstante nach Maßgabe der Zeitdauer des ersten Impulses ermittelt wird und
   - Aufbereiten von Signalteilen nach dem ersten Impuls, die Flanken aufweisen,

   **gekennzeichnet durch** folgende Schritte:

   - Auswertung von flankencodierten Daten **durch** Festlegen von Zeitfenstern, die nach Maßgabe der Zeitkonstante ($t_m$) gesetzt sind,
   - Ermitteln eines ersten und eines zweiten Zeitfensters (403), wobei das zweite Zeitfenster in Abhängigkeit vom Zeitpunkt einer beim ersten Zeitpunkt ermittelten Flanke gesetzt wird,
   - Aufbereiten eines ersten Signalteils, der eine erste Flanke hat, im ersten Zeitfenster,
   - Aufbereiten eines zweiten Signalanteils im zweiten Zeitfenster und
   - Erkennung einer weiteren Flanke im empfangenen Signal in einem nach Maßgabe der Zeitkonstante ($t_m$) gesetzten weiteren Zeitfenster (403), wobei das weitere Zeitfenster ausgehend von einer zuvor erkannten Flanke gesetzt wird.

3. Verfahren nach Anspruch 2, **dadurch gekennzeichnet, dass** das Zeitfenster (403) ausgehend von der zuletzt erkannten Flanke nach einer nach Maßgabe der Zeitkonstante ($t_m$) gesetzten ersten Zeitdauer ($t_1$) geöffnet wird.

4. Verfahren nach Anspruch 2 oder 3, **dadurch gekennzeichnet, dass** ein geöffnetes Fenster nach Maßgabe der Zeitkonstante ($t_m$) wieder geschlossen wird.

5. Verfahren nach Anspruch 4, **dadurch gekennzeichnet, dass**

   - dann, wenn innerhalb einer nach Maßgabe der Zeitkonstante ($t_m$) gesetzten zweiten Zeitdauer ($t_2$) nach Öffnen des Zeitfensters (403) eine weitere Flanke erkannt wurde, das Zeitfenster (403) nach einer nach Maßgabe der Zeitkonstante ($t_m$) gesetzten dritten Zeitdauer ($t_3$) nach Erkennen der weiteren Flanke geschlossen wird, oder
   - dann, wenn innerhalb der zweiten Zeitdauer ($t_2$) nach Öffnen des Zeitfensters (403) keine weitere Flanke erkannt wurde, das Fenster am Ende der zweiten Zeitdauer ($t_2$) geschlossen wird.

6. Verfahren nach Anspruch 5, **dadurch gekennzeichnet, dass** die Zeitdauern entsprechend einer oder mehrerer der folgenden Gleichungen gesetzt werden:

$$t_1 = t_m/2 + Dt,$$

$$t_2 = 3*t_m/4 - Dt,$$

$$t_3 = t_m/4,$$

wobei $t_m$ die Zeitkonstante, die gleich dem Codiertakt ist, $t_1$ die erste Zeitdauer, $t_2$ die zweite Zeitdauer, $t_3$ die dritte Zeitdauer, und Dt eine vierte Zeitdauer ist, die nach Maßgabe der Steilheit einer Flanke und der Zeitkonstante ($t_m$) bestimmt wird.

7. Verfahren nach Anspruch 4, **dadurch gekennzeichnet, , dass** das geöffnetes Fenster in Abhängigkeit vom Zeitpunkt einer im geöffneten Fenster erkannten Flanke wieder geschlossen wird.

8. Verfahren nach Anspruch 7, **dadurch gekennzeichnet, dass** der erste Signalimpuls ein Radimpuls (401) ist, der zur Bestimmung der Raddrehzahl verwendet wird, und weitere Signalimpulse Datenimpulse (405) sind, deren Flanken (402) zur codierten Übertragung von Daten dienen, wobei beim Radstillstand senderseitig der Radimpuls (401) durch einen Hilfsimpuls (501) ersetzt wird, wobei

   - der Hilfsimpuls (501) eine andere Amplitude als der Radimpuls (401) und eine im Wesentlichen gleiche Zeitdauer hat,
   - die Datenimpulse (405) eine andere Amplitude als der Radimpuls (401) haben,
   - und Hilfsimpuls (501) und Datenimpuls (405) eine im Wesentlichen gleiche Amplitude haben.

9. Verfahren nach Anspruch 8, **dadurch gekennzeichnet, dass** ein Fehler erkannt wird, wenn im Zeitfenster (403) keine Flanke, mehr als eine Flanke oder ein Radimpuls (401) erkannt wird, und daraufhin die Aufbereitung des Signals beendet wird.

10. Verfahren nach Anspruch 8 oder 9, **dadurch gekennzeichnet, dass** der Hilfsimpuls (501) eine Amplitude hat, die höher als ein erster (SW1) und niedriger als ein zweiter Schwellenwert (SW2) ist, und der Radimpuls (401) eine Amplitude hat, die höher als der zweite Schwellenwert (SW2) ist, und wobei ein Fehler erkannt wird, wenn ein dritter Schwellenwert (SW3) überschritten wird, der höher als der zweite Schwellenwert (SW2) ist.

11. Verfahren nach Anspruch 10, **dadurch gekennzeichnet, dass** zur Bestimmung der Zeitdauer des Radimpulses (401) die Zeitmessung beim Überschreiten des zweiten Schwellenwertes (SW2) begonnen und beim Unterschreiten des ersten Schwellenwertes (SW1) beendet wird, und wobei zur Bestimmung der Zeitdauer des Hilfsimpulses (501) die Zeitmessung beim Überschreiten des ersten Schwellenwertes (SW1) begonnen und beim Unterschreiten des ersten Schwellenwertes (SW1) beendet wird.

12. Verfahren nach einem der Ansprüche 8 bis 11, **dadurch gekennzeichnet, dass** dann, wenn, nachdem ein Rad- (401) oder Hilfsimpuls (501) den ersten (SW1) oder zweiten Schwellenwert (SW2) unterschritten hat, innerhalb einer nach Maßgabe der Zeitkonstante ($t_m$) gesetzten fünften Zeitdauer ($t_5$) kein weiterer Radimpuls (401) erkannt wurde, ein weiterer Impuls, der den ersten (SW1), aber nicht den zweiten Schwellenwert (SW2) überschreitet, als Hilfsimpuls (501) erkannt wird.

13. Verfahren nach Anspruch 12, **dadurch gekennzeichnet, dass** die fünfte Zeitdauer ($t_5$) länger als die Zeitdauer ist, die zum Übertragen der gegebenen maximalen Anzahl ($A_B$) von aufzubereitenden Datenbits benötigt wird.

14. Verfahren nach einem der Ansprüche 10 bis 13 oder 3, **dadurch gekennzeichnet, dass** das Zeitfenster (403) für das erste Datenbit nach der ersten Zeitdauer ($t_1$) geöffnet wird, wenn ein Radimpuls (401) den zweiten Schwellenwert (SW2) oder ein Hilfsimpuls (501) den ersten Schwellenwert (SW1) unterschreitet.

15. Verfahren nach einem der Ansprüche 10 bis 14, **dadurch gekennzeichnet, dass** die Aufbereitung des Signals nach Erkennung eines Fehlers solange unterbrochen wird, bis ein erneuter Rad- (401) oder Hilfsimpuls (501) erkannt wird.

16. Verfahren nach Anspruch 6 oder 10, **dadurch gekennzeichnet, dass** die dritte Zeitdauer ($t_3$) größer als die Zeitdauer ist, die der Radimpuls (401) benötigt, um den zweiten Schwellenwert (SW2) nach Überschreiten des ersten Schwellenwertes (SW1) zu überschreiten.

17. Verfahren nach einem der vorherigen Ansprüche, **dadurch gekennzeichnet, dass** die Ermittlung der Zeitkonstante ($t_m$) und die Aufbereitung des empfangenen Signals in Echtzeit erfolgen.

18. Vorrichtung (104) zum Aufbereiten eines empfangenen Signals, das Daten codiert übermittelt, wobei das Signal von einem aktiven Sensor (107) eines Fahrzeugrades (106) empfangen wird und wobei die Codierung der einzelnen Daten mit einem bestimmten Codiertakt erfolgte, das Signal nach Maßgabe des Codiertaktes erzeugte Flanken aufweist und das Signal unterscheidbare Impulse aufweist, zur Durchführung des Verfahrens nach einem der Ansprüche 2 bis 18, mit einer Flankenerkennungseinrichtung (611) zum Erkennen einer Flanke in einem Zeitfenster (403) und einer Zeitfenstersetzeinrichtung, **gekennzeichnet durch**

   - eine erste Ermittlungseinrichtung (605) zum Ermitteln einer nach Maßgabe des Codiertaktes gesetzten Zeitkonstante ($t_m$) aus dem empfan-

genen Signal, wobei die erste Ermittlungseinrichtung (605) die Zeitkonstante ($t_m$) nach Maßgabe der Zeitdauer des ersten Impulses ermittelt, und

- die Zeitfenstersetzeinrichtung (607) zum Setzen eines ersten Zeitfensters (403) nach Maßgabe der Zeitkonstante ($t_m$) und zum Setzen eines zweiten Zeitfensters (403) nach Maßgabe der Zeitkonstante ($t_m$) und in Abhängigkeit vom Zeitpunkt einer von der Flankenerkennungseinrichtung (611) im ersten Zeitfenster (403) erkannten Flanke geeignet ist.

19. Vorrichtung (104) nach Anspruch 18, **dadurch gekennzeichnet, dass** sie zur Ausgabe diskreter, Daten ausgelegt ist.

20. Fahrzeugbremsenregelung (101), welche eine Vorrichtung (104) nach Anspruch 18 oder 19 enthält, **dadurch gekennzeichnet, dass** die Vorrichtung (104) zum Empfang von Signalen eines aktiven Sensors (107) eines Fahrzeugrades (106) ausgelegt ist.

21. Vorrichtung (104) nach Anspruch 20, **dadurch gekennzeichnet, dass** sie eine Impulserkennungseinrichtung (601) beinhaltet, die eine Schwellenwertvergleichseinrichtung (602) aufweist, die die Amplituden der Impulse mit einem ersten (SW1), zweiten (SW2) und dritten Schwellenwert (SW3) vergleicht, wobei die Impulserkennungseinrichtung (601) so ausgelegt ist, dass sie einen, gegebenenfalls einen Radimpuls ersetzenden, Hilfsimpuls- (501) oder Datenimpuls (405) erkennt, wenn ein Impuls den ersten (SW1) und nicht den zweiten Schwellenwert (SW2) überschreitet, einen Radimpuls (401) erkennt, wenn ein Impuls den zweiten (SW2) und nicht den dritten Schwellenwert (SW3) überschreitet, und dass die Impulserkennungseinrichtung (601) so ausgelegt ist, dass diese einen Fehler erkennt, wenn ein Impuls den dritten Schwellenwert (SW3) überschreitet.

22. Vorrichtung (104) nach Anspruch 21, **dadurch gekennzeichnet, dass** die erste Ermittlungseinrichtung (605) einen ersten Zähler (606) zur Zeitdauerbestimmung des Rad- (401) oder Hilfsimpulses (501) aufweist, wobei die Ermittlungseinrichtung (605) so ausgelegt ist, dass sie erkennt, wenn der Rad- (401) oder Hilfsimpuls (501) den ersten Schwellenwert (SW1) überschreitet, worauf der erste Zähler (606) gestartet wird, zurückgesetzt und erneut gestartet wird, wenn die erste Ermittlungseinrichtung (605) aufgrund ihrer Auslegung erkennt, dass der Radimpuls (401) den zweiten Schwellenwert (SW2) überschreitet, und dass der erste Zähler (606) angehalten wird, wenn die erste Ermittlungseinrichtung (605) aufgrund ihrer Auslegung erkennt, dass der Rad- (401) oder Hilfsimpuls (501) den ersten Schwellenwert (SW1) unterschreitet.

23. Vorrichtung (104) nach einem der Ansprüche 20 bis 22, **dadurch gekennzeichnet, dass** die Zeitfenstersetzeinrichtung (607) folgende Merkmale aufweist:

- eine zweite Ermittlungseinrichtung (608) zum Ermitteln einer ersten ($t_1$), dritten ($t_3$) und sechsten Zeitdauer ($t_6$) nach Maßgabe der Zeitkonstante ($t_m$),
- eine erste Zeitdauervergleichseinrichtung (610), die die erste ($t_1$), dritte ($t_3$) und sechste Zeitdauer ($t_6$) von der zweiten Ermittlungseinrichtung (608) empfängt, und
- einen zweiten Zähler (609), dessen Ausgang mit der ersten Zeitdauervergleichseinrichtung (610) verbunden ist und dessen Zählerstand das Schließen und Öffnen des Zeitfensters (403) bestimmt, wobei
- der zweite Zähler (609) so ausgelegt ist, dass er zurückgesetzt und erneut gestartet wird, wenn die Flankenerkennungseinrichtung (611) in einem Zeitfenster (403) eine Flanke erkannt hat,
- die Zeitfenstersetzeinrichtung (607) entsprechend ihrer Auslegung ein Zeitfenster (403) schließt, wenn der zweite Zähler (609) einen ersten Zählerstand erreicht hat, der der dritten Zeitdauer ($t_3$) entspricht,
- die Zeitfenstersetzeinrichtung entsprechend ihrer Auslegung ein Zeitfenster (403) öffnet, wenn der zweite Zähler (609) einen zweiten Zählerstand erreicht hat, der der ersten Zeitdauer ($t_1$) entspricht und größer als der erste Zählerstand ist, und
- dass die Zeitfenstersetzeinrichtung (607) so ausgelegt ist, dass wenn der zweite Zähler (609) einen dritten Zählerstand erreicht hat, der der sechsten Zeitdauer ($t_6$) entspricht und größer als der zweite Zählerstand ist, der zweite Zähler (609) zurückgesetzt und erneut gestartet wird.

24. Vorrichtung (104) nach einem der Ansprüche 20 bis 23, **dadurch gekennzeichnet, dass** die Impulserkennungseinrichtung (601) folgende Merkmale aufweist:

- einen dritten Zähler (617) zum Messen der seit dem Beginn der Aufbereitung eines Signales verstrichenen Zeit,
- eine dritte Ermittlungseinrichtung (603) zum Ermitteln einer fünften Zeitdauer ($t_5$) nach Maßgabe der Zeitkonstante ($t_m$), und
- eine zweite Zeitdauervergleichseinrichtung (604), die entsprechend ihrer Auslegung den Stand des dritten Zählers (617) mit einem der fünften Zeitdauer ($t_5$) entsprechenden Wert vergleicht,

wobei dann, wenn der dritte Zähler (617) den der fünften Zeitdauer ($t_5$) entsprechenden Wert erreicht hat, die Impulserkennungseinrichtung (601) so ausgelegt ist, dass sie einen weiteren Impuls, der den ersten (SW1), aber nicht den zweiten Schwellenwert (SW2) überschreitet, als Hilfsimpuls (501) erkennt.

**25.** Vorrichtung (104) nach einem der Ansprüche 21 bis 24, **gekennzeichnet durch** eine Fehlererkennungseinrichtung (612), welche so ausgelegt ist, dass diese einen Fehler erkennt, wenn in einem Zeitfenster (403) die Flankenerkennungseinrichtung (611) keine Flanke, mehrere Flanken oder die Impulserkennungseinrichtung (601) einen Radimpuls (401) erkannt hat, und dass die Fehlererkennungseinrichtung (612) so konzipiert ist, dass sie daraufhin das Aufbereiten des Signals beendet.

**26.** Vorrichtung (104) nach einem der Ansprüche 19 bis 25, **gekennzeichnet durch** eine Speichereinrichtung (613) zum Speichern der aufbereiteten Datenbits und zumindest eines Gültigkeitsbits.

**27.** Vorrichtung (104) nach Anspruch 26, **dadurch gekennzeichnet, dass** die Speichereinrichtung (613) eine Gültigkeitssetzeinrichtung (615), einen Datenspeicher (614), in dem die Datenbits gespeichert werden, und einem Gültigkeitsspeicher (616), in dem die Gültigkeitsbits gespeichert werden, aufweist,
wobei die Gültigkeitssetzeinrichtung (615) so konzipiert ist, dass sie ein Gültigkeitsbit mit einem ersten Wert setzt, wenn die Fehlererkennungseinrichtung (612) in einem Zeitfenster (403) keinen Fehler erkannt hat, und ein Gültigkeitsbit mit einem zweiten Wert setzt, wenn die Fehlererkennungseinrichtung (612) in einem Zeitfenster (403) einen Fehler erkannt hat und wobei, wenn Fehler beim Lesen eines Paritiybits auftreten, alle Gültigkeitsbits mit dem zweiten Wert gesetzt werden

**28.** Verfahren nach Anspruch 1, **dadurch gekennzeichnet, dass** der weitere Zeitpunkt ausgehend von einer zuletzt erkannten Flanke gesetzt wird.

**29.** Verfahren nach Anspruch 2, **dadurch gekennzeichnet, dass** das weitere Zeitfenster ausgehend von einer zuletzt erkannten Flanke gesetzt wird.

**30.** Vorrichtung (104) nach Anspruch 19, **dadurch gekennzeichnet, dass** sie zur Ausgabe binärer Daten ausgelegt ist.

**31.** Vorrichtung nach Anspruch 24, **dadurch gekennzeichnet, dass** die derart ausgelegt, dass der dritte Zähler (617) zum Messen der seit dem Beginn der Aufbereitung eines Signals verstrichenen Zeit, dann zurückgesetzt und erneut gestartet wird, wenn ein Rad- (401) oder Hilfsimpuls (501) den ersten Schwellenwert (SW1) unterschritten hat.

**Claims**

**1.** Method of conditioning a received signal that transmits amplitude-coded data, wherein the coding of the individual data is effected with a defined coding clock pulse, the signal including edges produced in accordance with the coding clock pulse, and the transmitted signal includes distinguishable pulses, with the signal being the transmitted signal of an active sensor (107) of a vehicle wheel (106), comprising the following steps:

- determining from the received signal a time constant ($t_m$) set in accordance with the coding clock pulse, the said time constant being determined in accordance with the duration of the first pulse, and
- conditioning signal parts which include edges after the first pulse, at fixed times in accordance with the time constant ($t_m$),

**characterized by** the following steps:

- determining a first and a second time in accordance with the time constant ($t_m$), wherein the second time is set in dependence on the time of an edge determined at the first time,
- conditioning a first signal part, which has a first edge, at the first time,
- conditioning a second signal part at the second time, and
- scanning the signal at an additional time, with the additional time being set based on an edge which has been detected before.

**2.** Method of conditioning a received signal that transmits data, with the coding of the individual data being effected with a defined coding clock pulse, the signal including edges produced in accordance with the coding clock pulse, and the transmitted signal includes distinguishable pulses, with the signal being the transmitted signal of an active sensor (107) of a vehicle wheel (106), comprising the following steps:

- determining from the received signal a time constant ($t_m$) set in accordance with the coding clock pulse, the said time constant being determined in accordance with the duration of the first pulse, and
- conditioning signal parts which include edges after the first pulse,

**characterized by** the following steps:

- evaluating edge-coded data by establishing time windows which are set in accordance with the time constant ($t_m$),
- determining a first and a second time window (403), wherein the second time window is set in dependence on the time of an edge determined at the first time,
- conditioning a first signal part, which has a first edge, in the first time window,
- conditioning a second signal part in the second time window, and
- detecting another edge in the received signal in an additional time window (403) set in accordance with the time constant ($t_m$), wherein the additional time window is set based on an edge which has been detected before.

3.  Method as claimed in claim 2,
    **characterized in that** the time window (403) is opened based on the last detected edge after a first duration ($t_1$) that is set in accordance with the time constant ($t_m$) .

4.  Method as claimed in claim 2 or 3,
    **characterized in that** an opened window is closed again in accordance with the time constant ($t_m$).

5.  Method as claimed in claim 4,
    **characterized in that**

    - when another edge is detected within a second duration ($t_2$) that is set in accordance with the time constant ($t_m$) after opening of the time window (403), the time window (403) will be closed after a third duration ($t_3$) that is set in accordance with the time constant ($t_m$) after the additional edge is detected, or
    - when no additional edge is detected within the second duration ($t_2$) after opening of the time window (403), the window will be closed at the end of the second duration ($t_2$).

6.  Method as claimed in claim 5,
    **characterized in that** the durations are set corresponding to one or more of the following equations:

$$t_1 = t_m /2 + Dt,$$

$$t_2 = 3*t_m /4 - Dt,$$

$$t_3 = t_m /4,$$

wherein $t_m$ is the time constant which is equal to the coding clock pulse, $t_1$ is the first duration, $t_2$ is the second duration, $t_3$ is the third duration, and Dt is a fourth duration which is determined in accordance with the steepness of an edge and the time constant ($t_m$).

7.  Method as claimed in claim 4,
    **characterized in that** the opened window is closed again depending on the point of time when an edge is detected in the opened window.

8.  Method as claimed in claim 7,
    **characterized in that** the first signal pulse is a wheel pulse (401) which is used to determine the wheel rotational speed, and further signal pulses are data pulses (405) whose edges (402) serve for the coded transfer of data, and the said wheel pulse (401) is replaced by an auxiliary pulse (501) at the transmitting end in the event of wheel standstill, and

    - the auxiliary pulse (501) has an amplitude different from that of the wheel pulse (401) and essentially the same duration,
    - the data pulses (405) have an amplitude different from that of the wheel pulse (401), and
    - auxiliary pulse (5001) and data pulse (405) have an essentially equal amplitude.

9.  Method as claimed in claim 8,
    **characterized in that** an error is detected in case no edge, more than one edge, or a wheel pulse (401) is detected in the time window (403), and conditioning of the signal is terminated as a result.

10. Method as claimed in claim 8 or 9,
    **characterized in that** the auxiliary pulse (501) has an amplitude which is higher than a first threshold value (SW1) and lower than a second threshold value (SW2), and the wheel pulse (401) has an amplitude which is higher than the second threshold value (SW2), and an error is detected when a third threshold value (SW3) is exceeded which is higher than the second threshold value (SW2).

11. Method as claimed in claim 10,
    **characterized in that** for determining the duration of the wheel pulse (401), the time measurement is started when the second threshold value (SW2) is exceeded and terminated when the first threshold value (SW1) is not reached, and wherein for determining the duration of the auxiliary pulse (501) the time measurement is started when the first threshold value (SW1) is exceeded and terminated when the first threshold value (SW1) is not reached.

12. Method as claimed in any one of claims 8 to 11,
    **characterized in that** when no further wheel pulse (401) is detected within a fifth duration ($t_5$) that is set in accordance with the time constant ($t_m$) after a wheel pulse (401) or auxiliary pulse (501) has fallen below the first threshold value (SW1) or the second threshold value (SW2), another pulse which exceeds the first threshold value (SW1) but not the second threshold value (SW2) is detected as auxiliary pulse (501).

13. Method as claimed in claim 12,
**characterized in that** the fifth duration ($t_5$) is longer than the duration which is required for the transfer of the given maximum number ($A_B$) of data bits to be conditioned.

14. Method as claimed in any one of claims 10 to 13 or 3,
**characterized in that** the time window (403) for the first data bit is opened after the first duration ($t_1$) when a wheel pulse (401) falls below the second threshold value (SW2) or an auxiliary pulse (501) falls below the first threshold value (SW1).

15. Method as claimed in any one of claims 10 to 14,
**characterized in that** the conditioning of the signal after detection of an error is interrupted until a new wheel pulse (401) or auxiliary pulse (501) is detected.

16. Method as claimed in claims 6 or 10,
**characterized in that** the third duration ($t_3$) is longer than the duration which the wheel pulse (401) requires to exceed the second threshold value (SW2) after exceeding of the first threshold value (SW1).

17. Method as claimed in any one of the preceding claims,
**characterized in that** the time constant ($t_m$) is determined and the received signal is conditioned in real time.

18. Device (104) for conditioning a received signal that transmits coded data, with the signal being received from an active sensor (107) of a vehicle wheel (106), and
wherein the coding of the individual data is effected with a defined coding clock pulse, the signal includes edges produced in accordance with the coding clock pulse and the signal includes distinguishable pulses, for implementing the method as claimed in any one of claims 2 to 18, including an edge detection unit (611) for detecting an edge in a time window (403) and a time window setting unit,
**characterized by**

- a first determining unit (605) for determining from the received signal a time constant ($t_m$) set in accordance with the coding clock pulse, and the first determining unit (605) determines the

time constant ($t_m$) in accordance with the duration of the first pulse, and
- the time window setting unit (607) is appropriate for setting a first time window (403) in accordance with the time constant ($t_m$) and for setting a second time window (403) in accordance with the time constant ($t_m$) and in dependence on the time of an edge detected in the first time window (403) by the edge detection unit (611).

19. Device (104) as claimed in claim 18,
**characterized in that** it is designed for the output of discrete data.

20. Vehicle brake control (101) comprising a device (104) as claimed in claim 18 or 19,
**characterized in that** the device (104) is designed to receive signals of an active sensor (107) of a vehicle wheel (106).

21. Device (104) as claimed in claim 20,
**characterized in that** it contains a pulse detection unit (601), which includes a threshold value comparison unit (602) that compares the amplitudes of the pulses with a first (SW1), a second (SW2), and a third threshold value (SW3), and the pulse detection unit (601) is so designed that it detects an auxiliary pulse (501) or data pulse (405) possibly replacing a wheel pulse when a pulse exceeds the first threshold value (SW1) rather than the second threshold value (SW2), that it detects a wheel pulse (401) when a pulse exceeds the second threshold value (SW2) rather than the third threshold value (SW3), and that the pulse detection unit (601) is so designed that it detects an error when a pulse exceeds the third threshold value (SW3).

22. Device (104) as claimed in claim 21,
**characterized in that** the first determining unit (605) includes a first counter (606) for defining the duration of the wheel pulse (401) or auxiliary pulse (501), and the determining unit (605) is so designed that it detects when the wheel pulse (401) or auxiliary pulse (501) exceeds the first threshold value (SW1), whereupon the first counter (606) is started, reset and restarted when the first determining unit (605) due to its design detects that the wheel pulse (401) exceeds the second threshold value (SW2), and that the first counter (606) is stopped when the wheel pulse (401) or auxiliary pulse (501) falls below the first threshold value (SW1).

23. Device (104) as claimed in any one of the claims 20 to 22,
**characterized in that** the time window setting unit (607) includes the following features:

- a second determining unit (608) for determining

a first ($t_1$), third ($t_3$), and sixth duration ($t_6$) in accordance with the time constant ($t_m$),
- a first duration comparison unit (610) which receives the first ($t_1$), third ($t_3$), and sixth duration ($t_6$) from the second determining unit (608), and
- a second counter (609) whose output is connected to the first duration comparison unit (610) and whose count determines closing and opening of the time window (403), wherein
- the second counter (609) is reset and restarted when the edge detection unit (611) has detected an edge in a time window (403),
- the time window setting unit (607) corresponding to its design closes a time window (403) when the second counter (609) has reached a first count which corresponds to the third duration ($t_3$),
- the time window setting unit corresponding to its design opens a time window (403) when the second counter (609) has reached a second count which corresponds to the first duration ($t_1$) and is greater than the first count, and
- the time window setting unit (607) is so designed that the second counter (609) is reset and restarted when the second counter (609) has reached a third count which corresponds to the sixth duration ($t_6$) and is greater than the second count.

24. Device (104) as claimed in any one of claims 20 to 23, **characterized in that** the pulse detection unit (601) includes the following features:

- a third counter (617) for measuring the time that lapsed since the commencement of conditioning of a signal,
- a third determining unit (603) for determining a fifth duration ($t_5$) in accordance with the time constant ($t_m$), and
- a second duration comparison unit (604), which corresponding to its design compares the count of the third counter (617) with a value that corresponds to the fifth duration ($t_5$),

wherein when the third counter (617) has reached the value that corresponds to the fifth duration ($t_5$), the pulse detection unit (601) is so designed that it detects another pulse, which exceeds the first threshold value (SW1) rather than the second threshold value (SW2), as auxiliary pulse (501).

25. Device (104) as claimed in any one of claims 21 to 24, **characterized by** an error detection unit (612) which is so designed that it detects an error when the edge detection unit (611) detected no edge or several edges or the pulse detection unit (601) detected a wheel pulse (401) in a time window (403), and that the error detection unit (612) is so designed that it terminates the conditioning of the signal as a result.

26. Device (104) as claimed in any one of claims 19 to 25, **characterized by** a memory unit (613) for storing the conditioned data bits and at least one validity bit.

27. Device (104) as claimed in claim 26, **characterized in that** the memory unit (613) includes a validity setting unit (615), a data memory (614) in which the data bits are stored, and a validity memory (616) in which the validity bits are stored, wherein the validity setting unit (615) is so designed that it sets a validity bit with a first value when the error detection unit (612) detected no error in a time window (403), and sets a validity bit with a second value when the error detection unit (612) detected an error in a time window (403) and wherein, when errors appear when reading the parity bit, all validity bits are set with the second value.

28. Method as claimed in claim 1, **characterized in that** the additional point of time is set based on a last detected edge.

29. Method as claimed in claim 2, **characterized in that** the additional time window is set based on a last detected edge.

30. Device (104) as claimed in claim 19, **characterized in that** it is designed for the output of binary data.

31. Device (104) as claimed in claim 24, **characterized in that** the device is designed in such a fashion that the third counter (617) for measuring the time that has lapsed since the start of the conditioning of a signal is reset and re-started when a wheel pulse (401) or auxiliary pulse (501) drops below the first threshold value (SW1).

**Revendications**

1. Procédé pour traiter un signal reçu qui transmet des données codées en amplitude, dans lequel le codage des différentes données a été effectué avec un rythme de codage déterminé, le signal présente des flancs produits en fonction du rythme de codage, et le signal transmis présente des impulsions qui peuvent être distinguées, le signal étant le signal transmis d'un capteur actif (107) d'une roue de véhicule (106), comprenant les étapes consistant à :

- déterminer une constante de temps ($t_m$) définie en fonction du rythme de codage à partir du signal reçu, la constante de temps étant déterminée en fonction de la durée de la première impulsion,

- traiter des parties de signal après la première impulsion, qui présentent des flancs à des instants définis en fonction de la constante de temps ($t_m$),

**caractérisé par** les étapes suivantes :

- déterminer un premier et un deuxième instant en fonction de la constante de temps ($t_m$), le deuxième instant étant défini en fonction de l'instant d'un flanc déterminé lors du premier instant,
- traiter une première partie de signal qui présente un premier flanc au premier instant,
- traiter une deuxième partie de signal au deuxième instant et
- analyser le signal à un autre instant, l'autre instant étant défini à partir d'un flanc détecté auparavant.

2. Procédé pour traiter un signal reçu qui transmet des données, dans lequel le codage des différentes données a été effectué avec un rythme de codage déterminé, le signal présente des flancs produits en fonction du rythme de codage, et le signal transmis présente des impulsions qui peuvent être distinguées, le signal étant le signal transmis d'un capteur actif (107) d'une roue de véhicule (106), comprenant les étapes consistant à :

- déterminer une constante de temps ($t_m$) définie en fonction du rythme de codage à partir du signal reçu, la constante de temps étant déterminée en fonction de la durée de la première impulsion,
- traiter des parties de signal après la première impulsion, qui présentent des flancs,

**caractérisé par** les étapes suivantes :

- évaluer les données avec codage des flancs par définition de fenêtre de temps qui sont placées en fonction de la constante de temps ($t_m$),
- déterminer une première et une deuxième fenêtre de temps (403), la deuxième fenêtre de temps étant placée en fonction de l'instant d'un flanc déterminé au premier instant,
- traiter une première partie de signal qui présente un premier flanc, dans la première fenêtre de temps,
- traiter une deuxième partie de signal dans la deuxième fenêtre de temps et
- détecter un autre flanc dans le signal reçu dans une autre fenêtre de temps (403) placée en fonction de la constante de temps ($t_m$), l'autre fenêtre de temps étant placée à partir d'un flanc reconnu auparavant.

3. Procédé selon la revendication 2, **caractérisé en**

**ce que** la fenêtre de temps (403), partant du dernier flanc détecté, est ouverte après un premier intervalle de temps $t_1$ défini en fonction de la constante de temps ($t_m$).

4. Procédé selon la revendication 2 ou 3, **caractérisé en ce qu'**une fenêtre ouverte est fermée à nouveau en fonction de la constante de temps ($t_m$) .

5. Procédé selon la revendication 4, **caractérisé en ce que**

- ensuite, lorsqu'à l'intérieur d'un deuxième intervalle de temps ($t_2$), défini en fonction de la constante de temps ($t_m$), après ouverture de la fenêtre de temps (403), un autre flanc a été détecté, la fenêtre de temps (403) est fermée après un troisième intervalle de temps $t_3$ défini en fonction de la constante de temps ($t_m$), après détection de l'autre flanc, ou
- ensuite, lorsqu'à l'intérieur du deuxième intervalle de temps ($t_2$) après ouverture de la fenêtre de temps (403), aucun autre flanc n'a été détecté, la fenêtre est fermée à la fin du deuxième intervalle de temps ($t_2$).

6. Procédé selon la revendication 5, **caractérisé en ce que** les intervalles de temps sont définis en fonction d'une ou de plusieurs des équations suivantes :

$$t_1 = t_m/2 + Dt,$$

$$t_2 = 3*t_m/4 - Dt,$$

$$t_3 = t_m/4,$$

dans lesquelles $t_m$ est la constante de temps qui est égale au rythme de codage, $t_1$ est le premier intervalle de temps, $t_2$ le deuxième intervalle de temps, $t_3$ le troisième intervalle de temps, et Dt est un quatrième intervalle de temps qui est déterminé en fonction de la pente d'un flanc et de la constante de temps (tm).

7. Procédé selon la revendication 4, **caractérisé en ce que** la fenêtre ouverte est à nouveau fermée en fonction de l'instant d'un flanc détecté dans la fenêtre ouverte.

8. Procédé selon la revendication 7, **caractérisé en ce que** la première impulsion de signal est une impulsion de roue (401) qui est utilisée pour déterminer la vitesse de rotation de roue, et les autres impulsions de signal sont des impulsions de donnée (405) dont les flancs (402) servent à la transmission codée de données, à l'arrêt de la roue l'impulsion de roue (401) côté émetteur étant remplacée par une impulsion auxiliaire (501),

- l'impulsion auxiliaire (501) ayant une autre amplitude que l'impulsion de roue (401) et sensiblement la même durée,
- les impulsions de donnée (405) ayant une autre amplitude que l'impulsion de roue (401) et
- l'impulsion auxiliaire (501) et l'impulsion de donnée (405) ayant sensiblement la même amplitude.

9. Procédé selon la revendication 8, **caractérisé en ce qu'**une erreur est reconnue lorsque dans la fenêtre de temps (403) n'est détecté aucun flanc, plus d'un flanc ou une impulsion de roue (401), et après cela le traitement du signal est terminé.

10. Procédé selon la revendication 8 ou 9, **caractérisé en ce que** l'impulsion auxiliaire (501) présente une amplitude qui est supérieure à une première valeur de seuil (SW1) et inférieure à une deuxième valeur de seuil (SW2), et l'impulsion de roue (401) a une amplitude qui est supérieure à la deuxième valeur de seuil (SW2), et dans lequel une erreur est reconnue si une troisième valeur de seuil (SW3) est dépassée qui est supérieure à la deuxième valeur de seuil (SW2) .

11. Procédé selon la revendication 10, **caractérisé en ce que** pour déterminer la durée de l'impulsion de roue (401), la mesure de temps commence lorsqu'est dépassée la deuxième valeur de seuil (SW2) et est terminée lorsqu'est dépassée par le dessous la première valeur de seuil (SW1), et dans lequel pour déterminer la durée de l'impulsion auxiliaire (501), la mesure de temps est commencée lorsqu'est dépassée la première valeur de seuil (SW1) et terminée lorsqu'est dépassée par le dessous la première valeur de seuil (SW1).

12. Procédé selon l'une des revendications 8 à 11, **caractérisé en ce que** si, après qu'une impulsion de roue (401) ou une impulsion secondaire (501) a dépassé par le dessous la première valeur de seuil (SW1) ou la deuxième valeur de seuil (SW2), aucune autre impulsion de roue (401) n'a été détectée à l'intérieur d'un cinquième intervalle de temps ($t_5$) défini en fonction de la constante de temps ($t_m$), une autre impulsion qui dépasse la première valeur de seuil (SW1) mais non la deuxième valeur de seuil (SW2), est reconnue comme impulsion auxiliaire (501) .

13. Procédé selon la revendication 12, **caractérisé en ce que** le cinquième intervalle de temps ($t_5$) est plus long que l'intervalle de temps qui est nécessaire pour transmettre le nombre maximal ($A_B$) donné de bits de donnée à traiter.

14. Procédé selon l'une des revendications 10 à 13 ou 3, **caractérisé en ce que** la fenêtre de temps (403) pour le premier bit de donnée est ouverte après le premier intervalle de temps ($t_1$) lorsqu'une impulsion de roue (401) dépasse par le dessous la deuxième valeur de seuil (SW2) ou une impulsion auxiliaire (501) dépasse par le dessous la première valeur de seuil (SW1).

15. Procédé selon l'une des revendications 10 à 14, **caractérisé en ce que** le traitement du signal est interrompu après reconnaissance d'une erreur jusqu'à ce que soit détectée une nouvelle impulsion de roue (401) ou impulsion auxiliaire (501) .

16. Procédé selon la revendication 6 ou 10, **caractérisé en ce que** le troisième intervalle de temps ($t_3$) est supérieur à la durée qui est nécessaire à l'impulsion de roue (401) pour dépasser la deuxième valeur de seuil (SW2) après dépassement de la première valeur de seuil (SW1).

17. Procédé selon l'une des revendications précédentes, **caractérisé en ce que** la détermination de la constante de temps ($t_m$) et le traitement du signal reçu s'effectuent en temps réel.

18. Dispositif (104) pour traiter un signal reçu qui transmet des données de manière codée, dans lequel le signal est reçu par un capteur actif (107) d'une roue de véhicule (106) et dans lequel le codage des différentes données s'effectue avec un rythme de codage déterminé, le signal présente des flancs produits en fonction du rythme de codage et le signal présente des impulsions qui peuvent être distinguées, pour la mise en oeuvre du procédé selon l'une des revendications 2 à 18, comportant un dispositif de reconnaissance de flanc (611) pour reconnaître un flanc dans une fenêtre de temps (403) ainsi qu'un dispositif de mise en place de fenêtre de temps, **caractérisé par**

- un premier dispositif de détermination (605) pour déterminer une constante de temps ($t_m$) définie en fonction du rythme de codage à partir du signal reçu, le premier dispositif de détermination (605) déterminant la constante de temps ($t_m$) en fonction de la durée de la première impulsion, et
- le dispositif de mise en place de fenêtre de temps (607) convient à placer une première fenêtre (403) de temps en fonction de la constante de temps ($t_m$) et pour placer une deuxième fenêtre de temps (403) en fonction de la constante de temps ($t_m$) et en fonction de l'instant d'un flanc détecté par le dispositif de reconnaissance de flanc (611) dans la première fenêtre de temps (403).

19. Dispositif (104) selon la revendication 18, **caractérisé en ce qu'**il est conçu pour délivrer des données discrètes.

20. Régulation de freinage de véhicule (101) qui contient le dispositif (104) selon la revendication 18 ou 19, **caractérisée en ce que** le dispositif (104) est conçu pour recevoir des signaux d'un capteur actif (107) d'une roue de véhicule (106).

21. Dispositif (104) selon la revendication 20, **caractérisé en ce qu'**il contient un dispositif de reconnaissance d'impulsion (601) qui comporte un dispositif de comparaison de valeurs de seuil (602) lequel compare les amplitudes des impulsions à une première valeur de seuil (SW1), une deuxième valeur de seuil (SW2) et une troisième valeur de seuil (SW3), le dispositif de reconnaissance d'impulsion (601) étant conçu de manière à reconnaître une impulsion auxiliaire (501) ou impulsion de donnée (405) remplaçant le cas échéant une impulsion de roue, lorsqu'une impulsion dépasse la première valeur de seuil (SW1) et non pas la deuxième valeur de seuil (SW2), à reconnaître une impulsion de roue (401) lorsqu'une impulsion dépasse la deuxième valeur de seuil (SW2) et non pas la troisième valeur de seuil (SW3), et **en ce que** le dispositif de reconnaissance d'impulsion (601) est conçu de manière à reconnaître une erreur lorsqu'une impulsion dépasse la troisième valeur de seuil (SW3).

22. Dispositif (104) selon la revendication 21, **caractérisé en ce que** le premier dispositif de détermination (605) comporte un premier compteur (606) pour déterminer la durée de l'impulsion de roue (401) ou de l'impulsion auxiliaire (501), le dispositif de détermination (605) étant conçu de manière à reconnaître lorsque l'impulsion de roue (401) ou impulsion auxiliaire (501) dépasse la première valeur de seuil (SW1), après quoi le premier compteur (606) est démarré, réinitialisé et à nouveau démarré lorsque le premier dispositif de détermination (605) reconnaît, sur la base de son dimensionnement, que l'impulsion de roue (401) dépasse la deuxième valeur de seuil (SW2), et **en ce que** le premier compteur (606) est mis à l'arrêt lorsque le premier dispositif de détermination (605) reconnaît, sur la base de son dimensionnement, que l'impulsion de roue (401) ou impulsion auxiliaire (501) dépasse par le dessous la première valeur de seuil (SW1) .

23. Dispositif (104) selon l'une des revendications 20 à 22, **caractérisé en ce que** le dispositif de mise en place de fenêtre de temps (607) présente les caractéristiques suivantes :

- un deuxième dispositif de détermination (608) pour déterminer un premier intervalle de temps ($t_1$), un troisième intervalle de temps ($t_3$), et un sixième intervalle de temps ($t_6$) en fonction de la constante de temps ($t_m$),
- un premier dispositif de comparaison d'intervalles de temps (610) qui reçoit le premier intervalle de temps ($t_1$), le troisième intervalle de temps ($t_3$) et le sixième intervalle de temps ($t_6$) du deuxième dispositif de détermination (608), et
- un deuxième compteur (609) dont la sortie est reliée au premier dispositif de comparaison d'intervalles de temps (610) et **en ce que** sa position détermine la fermeture et l'ouverture de la fenêtre de temps (403),
- le deuxième compteur (609) étant conçu de manière à être réinitialisé et à nouveau démarré lorsque le dispositif de reconnaissance de flanc (611) a reconnu un flanc dans une fenêtre de temps (403),
- le dispositif de mise en place de fenêtre de temps (607) ferme, conformément à son dimensionnement, une fenêtre de temps (403) lorsque le deuxième compteur (609) a atteint une première position qui correspond au troisième intervalle de temps ($t_3$),
- le dispositif de mise en place de fenêtre de temps ouvre, conformément à son dimensionnement, une fenêtre de temps (403) lorsque le deuxième compteur (609) a atteint une deuxième position qui correspond au premier intervalle de temps ($t_1$) et est supérieure à la première position, et
- **en ce que** le dispositif de mise en place de fenêtre de temps (607) est conçu de manière que lorsque le deuxième compteur (609) a atteint une troisième position qui correspond au sixième intervalle de temps ($t_6$) et qui est supérieure à la deuxième position, le deuxième compteur (609) est réinitialisé et démarré à nouveau.

24. Dispositif (104) selon l'une des revendications 20 à 23, **caractérisé en ce que** le dispositif de reconnaissance d'impulsion (601) présente les caractéristiques suivantes :

- un troisième compteur (617) pour mesurer le temps qui s'est écoulé depuis le début du traitement d'un signal,
- un troisième dispositif de détermination (603) pour déterminer un cinquième intervalle de temps ($t_5$) en fonction de la constante de temps ($t_m$), et
- un deuxième dispositif de comparaison d'intervalles de temps (604) qui, conformément à son dimensionnement, compare la position du troisième compteur (617) à une valeur correspondant au cinquième intervalle de temps ($t_5$) .

dans lequel, lorsque le troisième compteur (617) a atteint la valeur correspondant au cinquième intervalle de temps ($t_5$), le dispositif de reconnaissance d'impulsion (601) est conçu de manière à reconnaître en tant qu'impulsion auxiliaire (501), une autre impulsion qui dépasse la première valeur de seuil (SW1) mais non pas la deuxième valeur de seuil (SW2).

25. Dispositif (104) selon l'une des revendications 21 à 24, **caractérisé par** un dispositif de reconnaissance d'erreur (612) qui est conçu de manière à reconnaître une erreur lorsque dans une fenêtre de temps (403) le dispositif de reconnaissance de flanc (611) n'a pas reconnu de flanc, a reconnu plusieurs flancs ou le dispositif de reconnaissance d'impulsion (601) a reconnu une impulsion de roue (401), et en ce que le dispositif de reconnaissance d'erreur (612) est conçu de manière à terminer après cela le traitement du signal.

26. Dispositif (104) selon l'une des revendications 19 à 25, **caractérisé par** un dispositif à mémoire (613) pour mémoriser les bits de donnée traités et au moins un bit de validité.

27. Dispositif (104) selon la revendication 26, **caractérisé en ce que** le dispositif à mémoire (613) comporte un dispositif de définition de validité (615), une mémoire de données (614) dans laquelle sont mémorisés les bits de donnée, et une mémoire de validité (616) dans laquelle sont mémorisés les bits de validité, le dispositif de définition de validité (615) étant conçu de manière à définir un bit de validité avec une première valeur lorsque le dispositif de reconnaissance d'erreur (612) n'a pas reconnu d'erreur dans une fenêtre de donnée (403), et à définir un bit de validité avec une deuxième valeur lorsque le dispositif de reconnaissance d'erreur (612) a reconnu une erreur dans une fenêtre de temps (403), et dans lequel, lorsque des erreurs apparaissent à la lecture d'un bit de parité, tous les bits de validité sont définis avec la deuxième valeur.

28. Procédé selon la revendication 1, **caractérisé en ce que** l'autre instant est défini à partir d'un dernier flanc reconnu.

29. Procédé selon la revendication 2, **caractérisé en ce que** l'autre fenêtre de temps est définie à partir d'un dernier flanc reconnu.

30. Dispositif (104) selon la revendication 19, **caracté-**

**risé en ce qu'**il est conçu pour l'édition de données binaires.

31. Dispositif selon la revendication 24, **caractérisé en ce qu'**il est conçu pour que le troisième compteur, pour mesurer le temps écoulé depuis le début du traitement d'un signal, soit réinitialisé puis à nouveau démarré lorsqu'une impulsion de roue (401) ou impulsion auxiliaire (501) a dépassé par le dessous la première valeur de seuil (SW1).

# Fig. 1

# Fig. 2

EP 1 125 406 B1

Fig. 3

Fig. 4

**Fig. 5**

Fig. 6

EP 1 125 406 B1

# Fig. 7

## Fig. 8a

401

SW2

t₁  t₃  t₁  t₃  t₁  t₃  t₁  t₃

405

SW1

403  402  404  403d

tₘ

405

## Fig. 8b

401

SW2

t₁  t₃  t₁  t₃  t₁  t₃  t₁  t₃

405

SW1

403  402  404  403e

tₘ

Fig. 9

State 0 — 1000

asl2='1' und asl3='0' und Zähler3_out='1'

asl3='1'

State 1 — 1001
Radimpuls ausmessen
Zähler1 starten
Zähler2 sarten bei asl3='0'

asl3='1'

State 2 — 1002
Hilfsimpuls ausmessen
Zähler1 starten
Zähler2 sarten bei asl2='0'

asl2='0'

asl2='0'

State 3
Autbereitung der Datenbits — 1003

asl3='1' oder Zähler3_out='1'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19650935 A1
- DE 19650935
- DE 19808575